# EUROPEAN PATENT APPLICATION

(11) **EP 4 109 836 A1**
(43) Date of publication of application: **28.12.2022**
(21) Application number: 20926071.0
(22) Date of filing: 17.03.2020
(51) Int. Cl.: H04L 29/02

(54) **DATA TRANSMISSION METHOD AND APPARATUS**

(71) Applicant: Huawei Technologies Co., Ltd., Shenzhen, Guangdong 518129, (CN)
(72) Inventor: LIU, Fengxi, Shenzhen, Guangdong 518129 (CN)
(74) Representative: MERH-IP Matias Erny Reichl Hoffmann Patentanwälte PartG mbB
(86) International application number: PCT/CN2020/079792
(87) International publication number: WO 2021/184226

(57) **Abstract**

A data transmission method and an apparatus are provided, to resolve a problem that network communication between a communications apparatus and an external network device cannot be ensured. A network protocol stack is deployed on both a wireless communications unit and a service processing unit, and the wireless communications unit is responsible for distribution. This can ensure processing of a network service and a throughput of a wireless network when a processing capability of the wireless communications unit is weak. The network protocol stack is deployed on the wireless communications unit. When the service processing unit is powered off, the wireless communications unit can still communicate with an external device, for example, remote wakeup. In addition, a network application can be independently developed for the wireless communications unit, and service deployment is also easier for a low-power-consumption wireless communications unit. The network protocol stack is deployed on the service processing unit. After being powered on, the service processing unit can independently exchange a network data packet (for example, an audio/video stream) with the external device. A network application can be independently developed for the service processing unit, and service deployment is also easier for the service processing unit.

## Description

### TECHNICAL FIELD

This application relates to the field of communications technologies, and in particular, to a data transmission method and an apparatus.

### BACKGROUND

Currently, a battery-powered photographing device generally includes a camera (camera) chip and a wireless fidelity (wireless fidelity, Wi-Fi) chip. The camera chip is configured to capture, encode, and store audio/video. The Wi-Fi chip is configured to receive and send wireless network data. To reduce battery consumption, when the photographing device is in a standby state, the camera chip is usually in a power-off state, and the Wi-Fi chip is usually in a working state. When the photographing device changes from the standby state to the working state, the camera chip is in a power-on state, that is, the working state.

Currently, encapsulation of a network data packet is usually performed by the camera chip. That is, a network protocol stack is deployed on the camera chip. In this case, when the photographing device is in the standby state, the camera chip is in the power-off state, and cannot encapsulate an IP packet. When the photographing device is in the standby state, some network-related processing needs to be performed, for example, network keepalive, peer-to-peer (peer to peer, P2P) hole punching, remote Wi-Fi wakeup, and some other security control signaling. When the camera chip is in the power-off state, an internet protocol (internet protocol, IP) packet cannot be encapsulated. Therefore, network-related processing cannot be performed.

### SUMMARY

Embodiments of this application provide a data transmission method and an apparatus, to resolve a problem that network communication between a communications apparatus and an external network device cannot be ensured.

According to a first aspect, an embodiment of this application provides a data transmission method, applied to a communications apparatus including a service processing unit and a wireless communications unit. The wireless communications unit receives a first network data packet from a business service device. The first network data packet includes an indication parameter. The indication parameter is used for determining that the first network data packet is processed by the wireless communications unit or the service processing unit. When the wireless communications unit determines that the first network data packet is processed by the wireless communications unit, the wireless communications unit decapsulates the first network data packet by using a first network protocol stack. When the wireless communications unit determines that the first network data packet is processed by the service processing unit, the wireless communications unit sends the first network data packet to the service processing unit. Further, the service processing unit decapsulates the first network data packet by using a second network protocol stack.

According to the foregoing solution, the network protocol stack is deployed on both a wireless communications unit and a service processing unit, and the wireless communications unit is responsible for distribution. This can ensure processing of a network service and a throughput of a wireless network when a processing capability of the wireless communications unit is weak. The network protocol stack is deployed on the wireless communications unit. When the service processing unit is powered off, the wireless communications unit can still communicate with an external device, for example, network keepalive and remote wakeup. In addition, a network application can be independently developed for the wireless communications unit, and service deployment is also easier for a low-power-consumption wireless communications unit. The network protocol stack is deployed on the service processing unit. After being powered on, the service processing unit can independently exchange a network data packet with the external device, for example, transmission of an audio/video stream. A network application can be independently developed for the service processing unit, and service deployment is also easier for the service processing unit.

In a possible design, the indication parameter includes one or more of an IP address, a port number, or a protocol type. The IP address may include an IP address of the business service device. The port number may include a port number of the service processing unit and/or a port number of the wireless communications unit.

In a possible design, that the wireless communications unit determines, based on the indication parameter, that the first network data packet is processed by the wireless communications unit or the service processing unit includes: When the indication parameter is first parameter information, the wireless communications unit determines, based on the first parameter information and a mapping relationship, that the first network data packet is processed by the wireless communications unit; and when the indication parameter is second parameter information, the wireless communications unit determines, based on the second parameter information and the mapping relationship, that the first network data packet is processed by the service processing unit. The mapping relationship includes an association relationship between the first parameter information and an identifier of the wireless communications unit, and/or an association relationship between the second parameter information and the service processing unit.

In the foregoing design, the wireless communications unit stores the mapping relationship and the indication parameter is carried in the network data packet, to determine to distribute to the service processing unit or to the wireless communications unit. The method is simple and easy to implement.

An IP address of the wireless communications unit may be the same as or different from an IP address of the service processing unit.

In a possible design, when the IP of the wireless communications unit is different from the IP address of the service processing unit, that the wireless communications unit sends the first network data packet to the service processing unit includes: The wireless communications unit translates a destination address of the first network data packet from address information of the wireless processing unit into address information of the service processing unit; and the wireless communications unit sends the first network data packet with the translated address to the service processing unit based on the address information of the service processing unit. The address information includes an internet protocol IP address and/or a port number. For example, the foregoing manner may be applicable to a scenario in which a NAT deployment mode is used.

In the foregoing design, the IP address of the wireless communications unit is different from the IP address of the service processing unit, and therefore is implemented in an address translation manner. The address information includes the IP address and/or the port number.

In a possible design, there is to-be-sent service data on the service processing unit, and the service processing unit may encapsulate, by using the second network protocol stack, the to-be-sent service data on the service processing unit into a second network data packet; the service processing unit sends the second network data packet to the wireless communications unit; and the wireless communications unit receives the second network data packet, and sends the second network data packet to the business service device.

In the foregoing design, the service processing unit can independently encapsulate the network data packet. After being powered on, the service processing unit can independently exchange the network data packet with the external device, for example, transmission of an audio/video stream. A network application can be independently developed for the service processing unit, and service deployment is also easier for the service processing unit.

In a possible design, that the wireless communications unit sends the second network data packet to the business service device may be implemented in the following manner: The wireless communications unit translates a source address of the second network data packet from the address information of the service processing unit into the address information of the wireless communications unit, and sends the second network data packet with the translated address to the business service device.

In the foregoing design, the IP of the wireless communications unit is different from the IP of the service processing unit, and therefore is implemented in an address translation manner. This is applicable to a NAT translation scenario.

In a possible design, the method may further include: When the wireless communications unit determines that remaining memory space is less than a first threshold, the wireless communications unit sends a first notification to the service processing unit. The first notification notifies the service processing unit to suspend sending a network data packet. After receiving the first notification, the service processing unit suspends sending if there is still to-be-sent network data packet on the service processing unit.

The foregoing design provides a backpressure mechanism. When network transmission quality deteriorates, a network data packet that is sent by the service processing unit and that carries the service data may not be processed in time. Consequently, available memory of the wireless communications unit is insufficient. Therefore, when the available memory of the wireless communications unit is insufficient, the service processing unit is notified to suspend sending. This can prevent service interruption caused by packet loss.

In a possible design, after sending the first notification to the service processing unit, the wireless communications unit sends a second notification to the service processing unit when determining that the remaining memory space is greater than a second threshold. The second notification indicates the service processing unit to continue sending the network data packet. The second threshold is greater than the first threshold. That the service processing unit sends the second network data packet to the wireless communications unit may be implemented in the following manner: When the service processing unit receives the second notification, the service processing unit sends the second network data packet to the wireless communications unit.

After a part of the memory space of the wireless communications unit is released, the memory is sufficient, and the service processing unit may be notified of sending in a timely manner. This improves transmission efficiency.

In a possible design, that the service processing unit sends the second network data packet to the wireless communications unit may be implemented in the following manner: When the service processing unit determines that duration for receiving the first notification sent by the service processing unit reaches preset duration, the service processing unit sends the second network data packet to the wireless communications unit.

In the foregoing design, after receiving the first notification, the service processing unit enters a scheduled sending mode without an instruction of the wireless communications unit. This reduces signaling interaction. After a data packet sent at a scheduled time is successfully received by the wireless communications unit, the network data packet is normally sent to the wireless communications unit.

In a possible design, the wireless communications unit obtains second communications information, encapsulates the second communications information into a third network data packet by using the first network protocol stack, and sends the third network data packet.

According to a second aspect, an embodiment of this application provides a data transmission apparatus, including a service processing unit and a wireless communications unit. A first network protocol stack is deployed on the wireless communications unit, and a second network protocol stack is deployed on the service processing unit. The wireless communications unit is configured to receive a first network data packet from a business service device. The first network data packet includes an indication parameter. The indication parameter is used for determining that the first network data packet is processed by the wireless communications unit or the service processing unit. The wireless communications unit is further configured to: when determining that the first network data packet is processed by the wireless communications unit, decapsulate the first network data packet by using the first network protocol stack. The wireless communications unit is further configured to: when determining that the first network data packet is processed by the service processing unit, send the first network data packet to the service processing unit. The service processing unit is configured to decapsulate the first network data packet by using the second network protocol stack.

In an example, an IP address of the wireless communications unit may be the same as an IP address of the service processing unit. In this case, the wireless communications unit may include a transceiver module, a distribution module, and the first network protocol stack. The transceiver module is configured to receive the first network data packet from the business service device. The distribution module is configured to determine, based on the indication parameter, that the first network data packet is processed by the wireless communications unit, and distribute the first network data packet to the first network protocol stack. The first network protocol stack is configured to decapsulate the first network data packet.

The distribution module is further configured to: when determining, based on the indication parameter, that the first network data packet is processed by the service processing unit, distribute the first network data packet to the service processing unit. The service processing unit includes the second network protocol stack. The second network protocol stack is configured to decapsulate the first network data packet.

For example, when the IP address of the wireless communications unit is the same as the IP address of the service processing unit, the wireless communications unit further includes a wireless network interface card driver, and the foregoing distribution module is deployed on the wireless network interface card driver.

In another example, the IP address of the wireless communications unit may be different from the IP address of the service processing unit. In this case, the wireless communications unit includes the transceiver module and the first network protocol stack. The transceiver module is configured to receive the first network data packet from the business service device. The first network protocol stack is configured to: when determining, based on the indication parameter, that the first network data packet is processed by the wireless communications unit, decapsulate the first network data packet.

The first network protocol stack is further configured to determine, based on the indication parameter, that the first network data packet is processed by the service processing unit, translate a destination address of the first network data packet from address information of the wireless communications unit into address information of the service processing unit, and send the first network data packet with the translated address to the service processing unit based on the address information of the service processing unit. The service processing unit includes the second network protocol stack. The second network protocol stack is configured to decapsulate the first network data packet with the translated address.

The address information includes a network protocol IP address and/or a port number.

In a possible design, when determining, based on the indication parameter, that the first network data packet is processed by the wireless communications unit or the service processing unit, the wireless communications unit is specifically configured to: When the indication parameter is first parameter information, the wireless communications unit determines, based on the first parameter information and a mapping relationship, that the first network data packet is processed by the wireless communications unit; or when the indication parameter is second parameter information, the wireless communications unit determines, based on the second parameter information and the mapping relationship, that the first network data packet is processed by the service processing unit. The mapping relationship includes an association relationship between the first parameter information and an identifier of the wireless communications unit, and/or an association relationship between the second parameter information and the service processing unit.

In a possible example, when the IP address of the wireless communications unit is the same as the IP address of the service processing unit, and the indication parameter is the first parameter information, the distribution module is configured to determine, based on the first parameter information and the mapping relationship, that the first network data packet is processed by the wireless communications unit; or when the indication parameter is the second parameter information, the distribution module is configured to determine, based on the second parameter information and the mapping relationship, that the first network data packet is processed by the service processing unit.

In a possible example, when the IP address of the wireless communications unit is the same as the IP address of the service processing unit, the wireless communications unit further includes a virtual protocol stack. The virtual protocol stack is configured to receive, as a proxy, the first network data packet distributed by the distribution module to the service processing unit, and send the first network data packet to the service processing unit.

In a possible example, when the IP address of the wireless communications unit is different from the IP address of the service processing unit, and the indication parameter is the first parameter information, the first network protocol stack is configured to determine, based on the first parameter information and the mapping relationship, that the first network data packet is processed by the wireless communications unit; or when the indication parameter is the second parameter information, the first network protocol stack is configured to determine, based on the second parameter information and the mapping relationship, that the first network data packet is processed by the service processing unit.

In a possible design, when the IP address of the wireless communications unit is different from the IP address of the service processing unit, before sending the first network data packet to the service processing unit, the wireless communications unit is further configured to translate the destination address of the first network data packet from the address information of the wireless processing unit into the address information of the service processing unit; and when sending the first network data packet to the service processing unit, the wireless communications unit is specifically configured to send the first network data packet with the translated address to the service processing unit based on the address information of the service processing unit.

In a possible example, the wireless communications unit further includes the wireless network interface card driver, configured to: receive the first network data packet from the transceiver module, and send the first network data packet to the first network protocol stack. The service processing unit further includes a first virtual network interface card (virtual NIC). The first virtual network interface card is configured to receive the first network data packet with the translated address from the wireless communications unit, and send the first network data packet with the translated address to the second network protocol stack. Address information of the first virtual network interface card is different from address information of the wireless network interface card driver. The address information of the first virtual network interface card is the address information of the service processing unit, and the address information of the wireless network interface card driver is the address information of the wireless communications unit.

In a possible example, the wireless communications unit further includes a second virtual network interface card. The second virtual network interface card is a proxy network interface card of the first virtual network interface card. The second virtual network interface card is configured to receive, as a proxy, the first network data packet with the translated address, and forward the first network data packet with the translated address to the first virtual network interface card.

In a possible design, the address information includes an internet protocol IP address and/or a port number.

In a possible design, the service processing unit is further configured to encapsulate, by using the second network protocol stack, to-be-sent service data on the service processing unit into a second network data packet. The service processing unit is further configured to send the second network data packet to the wireless communications unit. The wireless communications unit is further configured to receive the second network data packet, and send the second network data packet to the business service device.

In a possible example, when the IP address of the wireless communications unit is the same as the IP address of the service processing unit, the second network protocol stack is further configured to encapsulate the to-be-sent service data on the service processing unit into the second network data packet, and send the second network data packet to the wireless communications unit by using the first virtual network interface card. The virtual protocol stack is further configured to receive the second network data packet from the wireless communications unit, and send the second network data packet to the transceiver module. The transceiver module is further configured to send the second network data packet to the business service device.

In a possible design, before sending the second network data packet to the business service device, the wireless communications unit is further configured to translate a source address of the second network data packet from the address information of the service processing unit into the address information of the wireless communications unit. When sending the second network data packet to the business service device, the wireless communications unit is specifically configured to send the second network data packet with the translated address to the business service device.

In a possible example, when the IP address of the wireless communications unit is different from the IP address of the service processing unit, the second network protocol stack is further configured to encapsulate the to-be-sent service data on the service processing unit into the second network data packet, and send the second network data packet to the wireless communications unit by using the first virtual network interface card. The second virtual network interface card is further configured to receive the second network data packet. The first network protocol stack is further configured to translate the source address of the second network data packet from the address information of the service processing unit into the address information of the wireless communications unit, and send the second network data packet with the translated address to the business service device.

In a possible design, the wireless communications unit is further configured to: when determining that remaining memory space is less than a first threshold, send a first notification to the service processing unit. The first notification notifies the service processing unit to suspend sending a network data packet.

In a possible example, when the IP address of the wireless communications unit is the same as the IP address of the service processing unit, the virtual protocol stack is further configured to: when determining that the remaining memory space is less than the first threshold, send the first notification to the service processing unit. The first notification notifies the service processing unit to suspend sending the network data packet.

In a possible example, when the IP address of the wireless communications unit is different from the IP address of the service processing unit, the second virtual network interface card is further configured to: when determining that the remaining memory space is less than the first threshold, send the first notification to the service processing unit. The first notification indicates the service processing unit to suspend sending the network data packet. The first virtual network interface card is further configured to: before sending the second network data packet to the wireless communications unit, suspend sending the second network data packet when receiving the first notification.

In a possible design, after sending the first notification to the service processing unit, the wireless communications unit is further configured to send a second notification to the service processing unit when determining that the remaining memory space is greater than a second threshold. The second notification indicates the service processing unit to continue sending the network data packet. The second threshold is greater than the first threshold. The service processing unit is specifically configured to: when receiving the second notification, continue sending the network data packet to the wireless communications unit.

In a possible example, when the IP address of the wireless communications unit is the same as the IP address of the service processing unit, after sending the first notification to the service processing unit, the virtual protocol stack is further configured to send the second notification to the service processing unit when determining that the remaining memory space is greater than the second threshold. The second notification indicates the service processing unit to continue sending the network data packet. The first virtual network interface card is specifically configured to: when receiving the second notification, continue sending the network data packet to the wireless communications unit.

In a possible example, when the IP address of the wireless communications unit is different from the IP address of the service processing unit, after sending the first notification to the service processing unit, the second virtual network interface card is further configured to send the second notification to the service processing unit when determining that the remaining memory space is greater than the second threshold. The second notification indicates the service processing unit to continue sending the network data packet. The first virtual network interface card is specifically configured to: when receiving the second notification, continue sending the network data packet to the wireless communications unit.

In a possible design, when sending the second network data packet to the wireless communications unit, the service processing unit is specifically configured to: when determining that duration for receiving the first notification sent by the service processing unit reaches preset duration, send the second network data packet to the wireless communications unit.

In a possible example, when the IP address of the wireless communications unit is the same as the IP address of the service processing unit, the first virtual network interface card is further configured to: when determining that duration for receiving the first notification sent by the virtual protocol stack reaches the preset duration, continue sending the network data packet to the wireless communications unit.

In a possible example, when the IP address of the wireless communications unit is different from the IP address of the service processing unit, the first virtual network interface card is further configured to: when determining that duration for receiving the first notification sent by the second virtual network interface card reaches the preset duration, send the second network data packet to the wireless communications unit.

In a possible design, the wireless communications unit is further configured to obtain second communications information, encapsulate the second communications information into a third network data packet by using the first network protocol stack, and send the third network data packet.

In a possible example, the first network protocol stack is further configured to encapsulate to-be-sent communications information on the wireless communications unit into the third network data packet, and send the third network data packet to the transceiver module. The transceiver module is configured to send the third network data packet.

In a possible design, the indication parameter includes one or more of an IP address, a port number, or a protocol type.

According to a third aspect, this application provides a communications apparatus, including at least two processing elements (configured to implement a function of a service processing unit and a function of a wireless communications unit) and at least one storage element. The at least one storage element is configured to store a program and data. The at least one processing element is configured to perform the method according to any one of the first aspect or the possible implementations of the first aspect.

According to a fourth aspect, this application provides a communications apparatus, including a processor and an interface circuit. The interface circuit is configured to receive a signal from another communications apparatus other than the communications apparatus and transmit the signal to the processor, or send a signal from the processor to the another communications apparatus other than the communications apparatus. The processor is configured to implement functions of the service processing unit and the wireless communications unit, and may be specifically configured to implement the method according to any one of the first aspect or the possible implementations of the first aspect by using a logical circuit or by executing code instructions.

According to a fifth aspect, this application provides a computer program product. The computer program product includes computer instructions. When the computer instructions are executed, the method according to any one of the first aspect or the any possible implementations of the first aspect is performed.

According to a sixth aspect, this application provides a computer-readable storage medium. The computer storage medium stores computer instructions. When the computer instructions are executed, the method according to any one of the first aspect or the any possible implementations of the first aspect is performed.

### BRIEF DESCRIPTION OF DRAWINGS

FIG. 1 is a schematic diagram of state switching according to an embodiment of this application;
FIG. 2 is a schematic diagram of a structure of a possible communications apparatus according to an embodiment of this application;
FIG. 3 is a schematic diagram of a structure of another possible communications apparatus according to an embodiment of this application;
FIG. 4 is a schematic diagram of a communication connection according to an embodiment of this application;
FIG. 5 is a schematic diagram of an architecture of a communications system according to an embodiment of this application;
FIG. 6 is a schematic diagram of a deployment mode of a possible network protocol stack according to an embodiment of this application;
FIG. 7 is a schematic diagram of a deployment mode of another possible network protocol stack according to an embodiment of this application;
FIG. 8 is a schematic diagram of an architecture of another communications system according to an embodiment of this application;
FIG. 9 is a schematic flowchart of a downlink data transmission method according to an embodiment of this application;
FIG. 10 is a schematic flowchart of an uplink data transmission method according to an embodiment of this application;
FIG. 11A is a schematic diagram of an example of a deployment architecture of a variant bridge according to an embodiment of this application;
FIG. 11B is a schematic diagram of another example of a deployment architecture of a variant bridge according to an embodiment of this application;
FIG. 12A, FIG. 12B and FIG. 12C are a schematic flowchart of a data transmission method in a variant bridge deployment scenario according to an embodiment of this application;
FIG. 13 is a schematic flowchart of another downlink data transmission method in a variant bridge deployment scenario according to an embodiment of this application;
FIG. 14 is a schematic flowchart of another uplink data transmission method in a variant bridge deployment scenario according to an embodiment of this application;
FIG. 15A is a schematic diagram of an example of a NAT deployment architecture according to an embodiment of this application;
FIG. 15B is a schematic diagram of another example of a NAT deployment architecture according to an embodiment of this application; and
FIG. 16A, FIG. 16B, FIG. 16C, and FIG. 16D are a schematic flowchart of a communication method in a NAT deployment scenario according to an embodiment of this application.

### DESCRIPTION OF EMBODIMENTS

Embodiments of this application may be applied to a communications apparatus. The communications apparatus can perform wireless communication. Wireless communication may include a third generation (3rdgeneration, 3G) network, a 4G network, a 5G network, or a future 6G network, or may communicate by using a wireless fidelity (wireless fidelity, Wi-Fi) network, Bluetooth, or the like. The communications apparatus may be a battery-powered camera device (which may also be referred to as a battery camera device), for example, a camera, a video camera, or a video recorder; or may be a battery communications apparatus that can perform wireless communication, for example, a child early education machine or a wearable terminal device. The communications apparatus may be powered by only a battery, or may be hybrid powered by a battery and a power supply. The solutions provided in embodiments of this application are also applicable to a communications apparatus that is powered by only a power supply.

The communications apparatus includes a service processing unit and a wireless communications unit. The communications apparatus may further include a microprocessor control unit (microprocessor control unit, MCU). The communications apparatus may further include a component such as another sensor.

The service processing unit is responsible for processing services. A battery camera device is used as an example. The battery camera device is configured to capture, encode, and store audio/video, and send encoded bitstream data to a wireless communications chip for transmission. The service processing unit is usually in a power-off state (a discontinuous power supply state), and is controlled, according to a requirement, by the MCU to be powered on to perform service processing. Because the communications apparatus is powered by a battery, to save power, power-on working time of the service processing unit is generally short. Generally, memory of the service processing unit is 16 MB or larger, and the memory that can be used by applications is sufficient.

The MCU, as a main control unit, is responsible for overall control of the communications apparatus, including control of the wireless communications unit, power-on and power-off control of the service processing unit, capturing and processing of another peripheral sensor, and the like. When the communications apparatus is in a standby state, the MCU processing unit is usually in a continuous power supply state.

The wireless communications unit is mainly configured to receive and send wireless network data. When the communications apparatus is in a working state, the wireless communications chip is usually in a continuous power supply state. It should be noted that, if the communications apparatus includes an MCU, when the communications apparatus is in the standby state, the wireless communications chip, like a service processing chip, may be in a discontinuous power supply state. Memory on a wireless communications unit side is generally hundreds of KBs, and available memory is generally tens to hundreds of KBs.

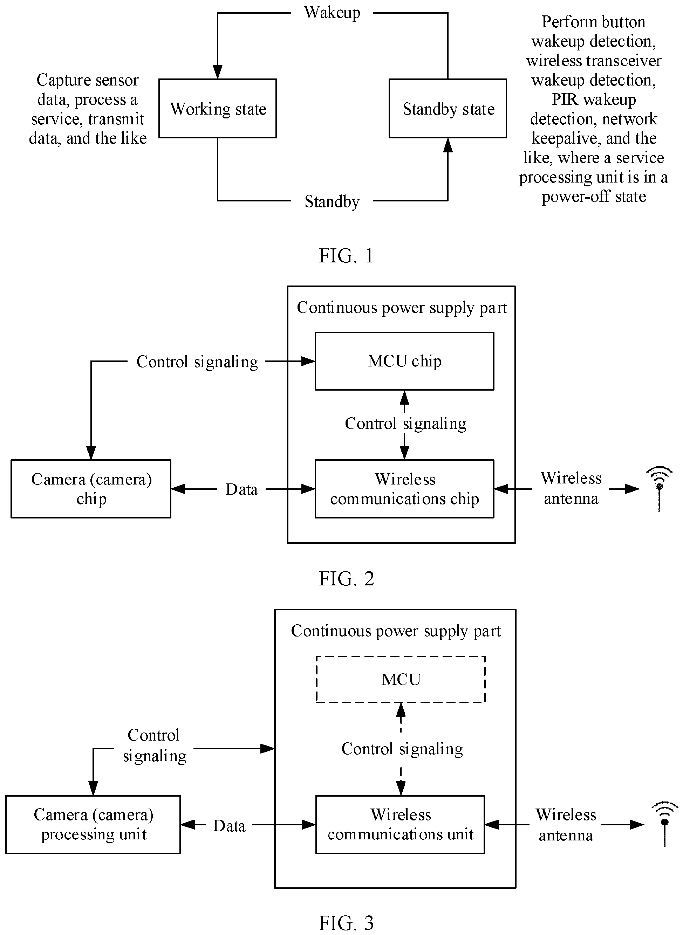

It is mentioned above that the communications apparatus is in the working state, and in addition to the working state, the communications apparatus may also be in the standby state. Refer to FIG. 1. When a communications apparatus is in a working state, the communications apparatus captures sensor data, processes a service, transmits data, and the like. After entering the working state and receiving a standby instruction, the communications apparatus changes from the working state to a standby state. In the standby state, the communications apparatus may be configured to perform button wakeup detection, wireless transceiver wakeup detection, passive infrared (passive infrared, PIR) wakeup detection, network keepalive, and the like. In the standby state, to reduce power consumption, a service processing unit is in a power-off state, and a wireless communications unit and/or an MCU is in a low-power-consumption working state. After receiving a wakeup instruction, the communications apparatus in the standby state enters the working state.

In a possible manner, the service processing unit, the wireless communications unit, and the MCU are separately deployed on different chips. A battery camera device is used as an example, and may generally include a camera chip, a wireless communications chip, and an MCU chip, as shown in FIG. 2. The camera chip may include one or more service processing units, and is mainly configured to process a camera-related service. The wireless communications chip may include one or more wireless communications units, and is mainly configured to receive and send wireless network data. The MCU chip, as a main control unit, is responsible for overall control of the camera device, including control of the wireless communications chip and the camera chip. The wireless communications chip and the MCU chip belong to continuous power supply parts.

In another possible manner, the wireless communications unit and the MCU are deployed on a same chip. A battery camera device is further used as an example, and may generally include a camera chip and a wireless communications chip. The wireless communications chip performs functions of the wireless communications unit and the MCU. When a plurality of sensors need to be disposed, pins on the wireless communications chip may not be sufficient to meet a requirement of a quantity of sensors that need to be connected. Alternatively, an MCU chip may be added to the battery camera device to connect to the sensor and manage the plurality of sensors. It is determined, according to a requirement, whether the MCU chip serving as an optional component is disposed in the battery camera device.

In still another possible manner, the wireless communications unit, the MCU, and the service processing unit may all be deployed on one chip. In an example, functions of the MCU may also be integrated into the wireless communications unit. Refer to FIG. 3. The wireless communications unit may be used as a continuous power supply part to perform control of an entire communications apparatus, receiving and sending of wireless data, network keepalive with a server, and the like. An MCU is optional and can be added as required. When a plurality of sensors need to be disposed and pins on a chip are not sufficient to meet a requirement of a quantity of sensors that need to be connected, the MCU is added.

It should be noted that the wireless communications unit, the MCU, and a service processing unit may all be implemented by a processor. For example, the processor may include one or more of a central processing unit (central processing unit, CPU), a graphics processing unit (graphics processing unit, GPU), an image signal processor (image signal processor, ISP), a digital signal processor (digital signal processor, DSP), and a neural processing unit (neural processing unit, NPU).

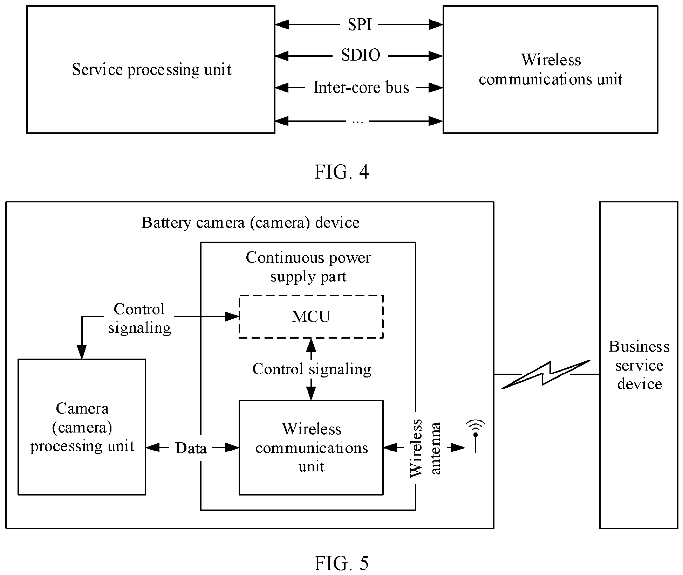

Refer to FIG. 4. A service processing unit and a wireless communications processing unit may be connected through a hardware interconnect bus. The hardware interconnect bus may include a serial peripheral interface (Serial Peripheral Interface, SPI), a secure digital input and output (secure digital input and output, SDIO) card, an inter-core bus, or the like. It should be noted that the inter-core bus scenario is applicable to a case in which the service processing unit and the wireless communications unit share a same chip. The service processing unit and the wireless communications unit are directly connected through a system bus, and may directly access a storage unit of each other.

A communications apparatus may further include a memory, configured to store instructions executed by the service processing unit and the wireless communications unit, or store input data required by the service processing unit and the wireless communications unit to run the instructions, or store data generated after the service processing unit and the wireless communications unit run the instructions.

For example, the memory may be a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art.

FIG. 5 is a schematic diagram of an architecture of a possible communications system. The communications system includes the foregoing communications apparatus and a business service device. The business service device may be a router, a server, an access network device (namely, a base station), another communications apparatus, a terminal device (such as a mobile phone), or the like. In FIG. 5, a battery camera device is used as an example. When transmitting network data between the communications apparatus and the business service device, the communications apparatus needs to encapsulate the network data into an IP packet, and then send the IP packet to the business service device. Therefore, a network protocol stack, for example, an IP stack (Stack), needs to be deployed on the communications apparatus to encapsulate the IP packet. In subsequent description, an example in which the communications apparatus is a battery camera device is used.

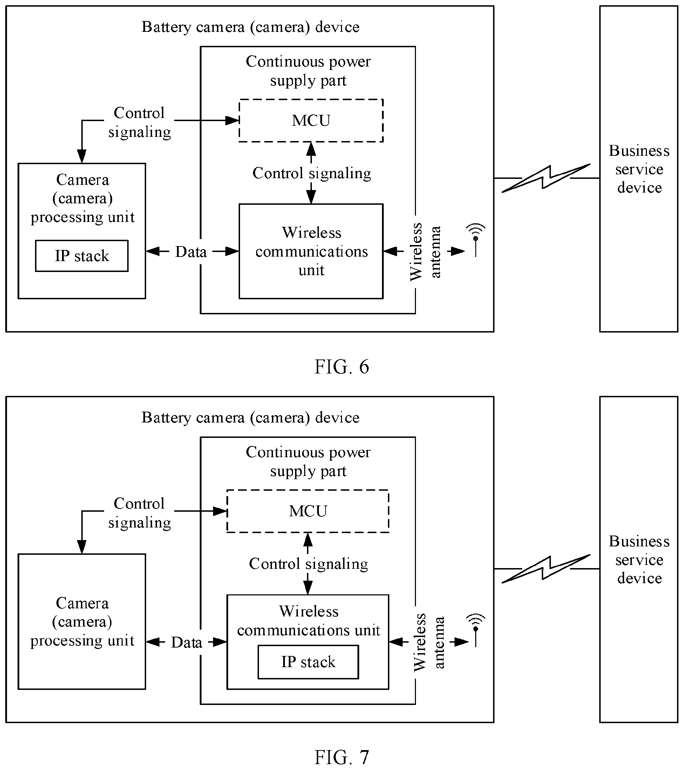

In a possible deployment architecture, as shown in FIG. 6, an IP stack is deployed on a service processing unit, and no IP stack is deployed on a wireless communications unit. When a battery camera device is in a working state, that is, when the service processing unit is in a power-on state, the battery camera device captures a video stream, encapsulates data corresponding to the video stream into an IP packet, and sends the IP packet to the wireless communications unit. Then, the wireless communications unit sends the IP packet to a business service device by using an antenna.

When the battery camera device is in a standby state, the service processing unit is in a power-off state (or a low-power-consumption power supply state), and the IP packet cannot be encapsulated. The low-power-consumption power supply state may be referred to as the standby state. An example in which the service processing unit is in the power-off state is used for description in the following. When the battery camera device is in the standby state, some network-related processing still needs to be performed, for example, network keepalive, peer-to-peer (peer to peer, P2P) hole punching, remote Wi-Fi wakeup, and some other security control signaling. However, when the battery camera device is in the standby state, the service processing unit is in the power-off state. Only the wireless communications unit works intermittently, and maintains a heartbeat connection with the business service device by using a wireless communications line. Because a network protocol stack is deployed on the service processing unit, the camera device in the standby state cannot encapsulate the IP packet, and therefore cannot perform network-related processing, especially sending of the IP packet related to the security control signaling, and cannot perform P2P hole punching.

It should be noted that network keepalive means that the battery camera device periodically sends a heartbeat IP packet to the business service device, to notify the business service device that the battery camera device is still alive.

P2P hole punching means that two devices, for example, the battery camera device and a terminal device (for example, a mobile phone or a tablet computer), can be directly interconnected to transmit data by using a P2P technology without using a server.

Remote Wi-Fi wakeup means that the business service device or the like sends a wakeup instruction to the battery camera device through a network path, for example, a secure keepalive path. The wakeup instruction is encapsulated in the IP packet. After receiving the wakeup instruction, the battery camera device wakes up the service processing unit to perform service processing. If no network protocol stack is deployed on the wireless communications unit, the IP packet cannot be decapsulated, the wake-up instruction cannot be parsed, and the service processing unit cannot be woken up to perform service processing.

In another possible deployment architecture, as shown in FIG. 7, an IP stack is deployed on a wireless communications unit, and no IP stack is deployed on a service processing unit. When a battery camera device is in a working state, that is, when the service processing unit is in a power-on state, the battery camera device captures a video stream (or an audio/video stream or an audio stream), and sends the video stream to the wireless communications unit, so that the wireless communications unit encapsulates the received video stream into an IP packet and sends the IP packet to a business service device.

On one hand, available memory on the wireless communications unit is small, usually ranging from tens of KBs to hundreds of KBs, and an application that has a larger memory requirement cannot be deployed on the wireless communications unit. For example, if a real-time streaming transmission protocol (real time streaming protocol, RTSP) service is deployed on the wireless communications unit, and the service processing unit directly sends a video I frame (for example, 150 KBs) to the wireless communications unit. In this case, transmission may fail due to insufficient memory. In addition, for a network retransmission function, such as transmission control protocol (transmission control protocol, TCP) retransmission and P2P retransmission, a large memory space is required. If the memory space is insufficient and packet loss occurs, the retransmitted data packets cannot be obtained. As a result, services are interrupted.

On the other hand, currently, a network service related to audio/video is generally deployed on the service processing unit, for example, an audio/video stream or a network intercom service. If a network protocol stack is deployed on the wireless communications unit, re-adapting these network services takes a heavy workload. In addition, a CPU processing capability of the wireless communications unit is weak, and a CPU frequency generally ranges from tens of megabytes to hundreds of megabytes. If some processing of the RTSP/P2P service is transferred to the wireless communications unit, for example, unpacking of the audio/video data stream, data encryption and decryption, network retransmission processing, and the like are transferred to the wireless communications unit, load on the wireless communications unit is heavy, processing load of the wireless communications unit is further increased. As a result, a throughput of wireless communication is reduced.

In embodiments of this application, "at least one" means one or more, and "a plurality of' means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, it should be understood that, in the description of this application, terms such as "first" and "second" are merely used for distinguishing and description, but should not be understood as indicating or implying relative importance, or should not be understood as indicating or implying a sequence. Numerals used in embodiments of this application are merely used for differentiation for ease of description, but do not limit the scope of embodiments of this application. The sequence numbers of the foregoing processes do not mean an execution sequence, and the execution sequence of the processes should be determined based on functions and internal logic of the processes.

In view of this, the embodiments of this application provide a data transmission method and an apparatus. A network protocol stack is deployed on both a service processing unit and a wireless communications unit, and the service processing unit and the wireless communications unit are respectively responsible for encapsulation of their own data packets. The service processing unit has its own network protocol stack. After the service processing unit is powered on, a network data packet may be encapsulated by using the network protocol stack on the service processing unit side, and is transmitted to a network by using the wireless communications unit, for example, transmission of an audio/video bitstream. The wireless communications unit has its own network protocol stack. When the service processing unit is powered off, the wireless communications unit may still continue performing network interaction with an external network, for example, network keepalive, peer-to-peer (peer to peer, P2P) hole punching, remote Wi-Fi wakeup, and transmission of some other security control signaling. The method and the apparatus are based on a same inventive concept. Because the method and the apparatus have a similar problem-resolving principle, for implementations of the apparatus and the method, refer to each other, and no repeated description is provided.

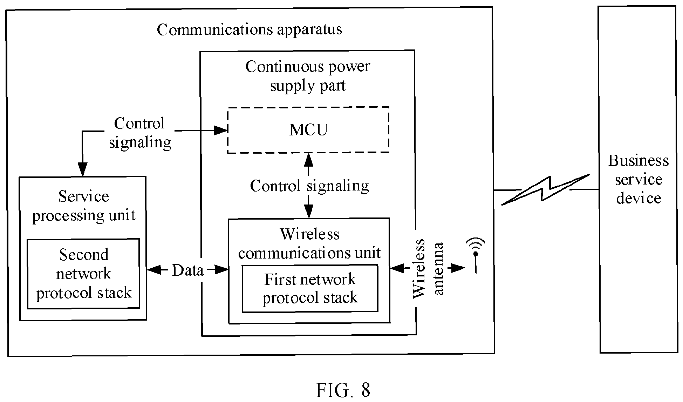

FIG. 8 is a schematic diagram of an architecture of a communications system according to an embodiment of this application. A network protocol stack is deployed on both a service processing unit and a wireless communications unit of a communications apparatus. For ease of distinguishing, the network protocol stack deployed on the wireless communications unit is referred to as a first network protocol stack. The network protocol stack deployed on the service processing unit is referred to as a second network protocol stack. A network protocol may include a transmission control protocol/internet protocol (transmission control protocol/internet protocol, TCP/IP), a user datagram protocol (user datagram protocol, UDP)/IP, or the like.

In a possible deployment mode, the service processing unit and the wireless communications unit may share a same IP address. For example, a deployment mode of a variant bridge is used. The deployment mode of the variant bridge is similar to that of a bridge, and a difference lies in that in the deployment mode of the variant bridge, an IP address of the service processing unit is the same as an IP address of the wireless communications unit. If the service processing unit and the wireless communications unit are deployed on the communications apparatus in a bridge manner, the IP address of the service processing unit is different from the IP address of the wireless communications unit.

In another possible deployment mode, the service processing unit and the wireless communications unit use different IP addresses. For example, a deployment mode of network address translation (network address translation, NAT)/a router is used.

The following describes in detail a solution in which the service processing unit and the wireless communications unit may share a same IP address.

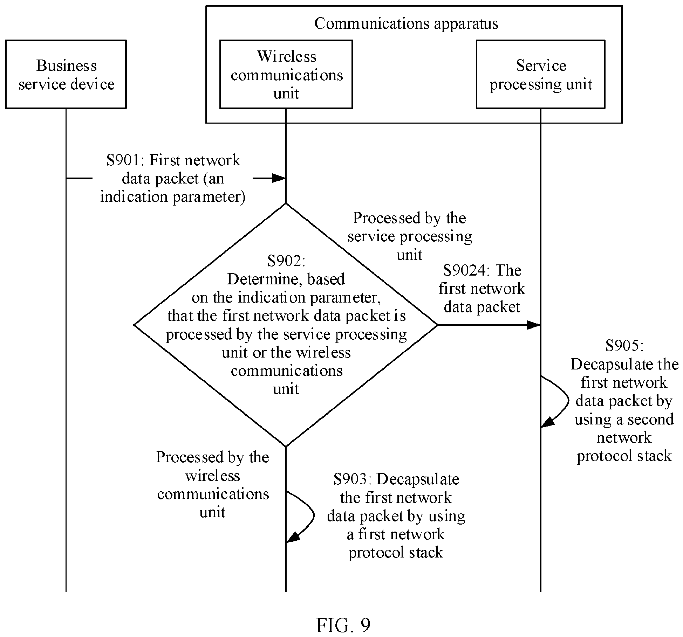

FIG. 9 is a schematic flowchart of a data transmission method according to an embodiment of this application.

S901: A wireless communications unit receives a first network data packet from a business service device.

The first network data packet carries an indication parameter. The indication parameter may be carried in a packet header of the first network data packet.

The indication parameter may include one or more of an IP address, a port number, and a protocol type. The IP address may include a source IP address and/or a destination IP address. The port number may include a source port number and/or a destination port number. For example, the indication parameter may include a four-tuple: an IP address of the business service device, a port number of the business service device, a used protocol type, and a port number of a communications apparatus. Alternatively, the indication parameter may be a dedicated parameter that is set in the packet header of the first network data packet, for example, a specified keyword.

The indication parameter is used for determining that the first network data packet is processed by the service processing unit or the wireless communications unit. That is, the indication parameter is used for determining that the first network data packet is distributed to the service processing unit or to the wireless communications unit. The indication parameter may also have another name, for example, may also be referred to as a forwarding parameter or a distribution parameter. This is not limited in this application.

S902: The wireless communications unit determines, based on the indication parameter, that the first network data packet is processed by the service processing unit or the wireless communications unit.

For example, when the indication parameter is first parameter information, the first network data packet is processed by the wireless communications unit. When the indication parameter is second parameter information, the first network data packet is processed by the service processing unit. In subsequent description, an example in which the first parameter information indicates that the network data packet is processed by the wireless communications unit, and the second parameter information indicates that the network data packet is processed by the service processing unit is used.

For example, if the indication parameter includes a port number, the first parameter information and the second parameter information may be different port numbers. That is, it is determined, based on the different port numbers, that the first network data packet is processed by the service processing unit or the wireless communications unit. For another example, the indication parameter includes the destination IP address, and the first parameter information and the second parameter information may be different destination IP addresses. That is, it is determined, based on the different destination IP addresses, that the first network data packet is processed by the service processing unit or the wireless communications unit. For another example, the indication parameter includes the destination IP address and the protocol type. The destination IP address information and the protocol type information included in the first parameter information is different from the destination IP address information and the protocol type information included in the second parameter information.

There may be a mapping relationship on the communications apparatus. The mapping relationship is used for describing an association relationship between parameter information (the first parameter information or the second parameter information) carried by the indication parameter and the wireless communications unit or the service processing unit. For example, the mapping relationship includes an association relationship between the first parameter information and an identifier of the wireless communications unit and/or an association relationship between the second parameter information and the service processing unit.

In an example, the mapping relationship may include only one or more pieces of first parameter information that indicate processing by the wireless communications unit. After receiving a network data packet, the wireless communications unit may read parameter information from an indication bit corresponding to an indication parameter in a packet header of the network data packet, and match the read parameter information with the first parameter information included in the mapping relationship. If it is matched, that is, the packet header of the network data packet carries the first parameter information, it is determined that the network data packet should be processed by the wireless communications unit. In an optional case, if the read parameter information does not match the first parameter information included in the mapping relationship, it is determined that the packet header of the network data packet carries the second parameter information, and it is further determined that the network data packet should be processed by the service processing unit.

In another example, the mapping relationship may include only one or more pieces of second parameter information that indicate processing by the service processing unit. After receiving a network data packet, the wireless communications unit may read parameter information from an indication bit corresponding to an indication parameter in a packet header of the network data packet, and perform matching based on the read parameter information and the second parameter information included in the mapping relationship. If it is matched, that is, the packet header of the network data packet carries the second parameter information, it is determined that the network data packet should be processed by the service processing unit. If the read parameter information does not match the second parameter information included in the mapping relationship, it is determined that the packet header of the network data packet carries the first parameter information, and it is further determined that the network data packet should be processed by the wireless communications unit.

In still another example, the mapping relationship may include one or more pieces of second parameter information that indicate processing by the service processing unit, and further include one or more pieces of first parameter information that indicate processing by the wireless communications unit. After receiving a network data packet, the wireless communications unit may read parameter information from an indication bit corresponding to an indication parameter in a packet header of the network data packet, and perform matching based on the read parameter information and the first parameter information and the second parameter information included in the mapping relationship. If the first parameter information is matched, that is, the packet header of the network data packet carries the first parameter information, it is determined that the network data packet should be processed by the wireless communications unit. If the read parameter information matches the second parameter information included in the mapping relationship, that is, the packet header of the network data packet carries the second parameter information, it is determined that the network data packet should be processed by the service processing unit. If the parameter information read from the network data packet does not match both the first parameter information and the second parameter information, the wireless communications unit may discard the network data packet.

The mapping relationship may be stored in a form of a linked list, or in a form of an array, or in another storage form. This is not limited in this embodiment of this application. Therefore, the wireless communications unit may determine, based on the indication parameter and the mapping relationship, that the first network data packet is processed by the wireless communications unit. In this embodiment of this application, a table storing the mapping relationship is referred to as a forwarding table. That is, the communications apparatus may store the forwarding table. The forwarding table may include one or more of the IP address of the business service device, the port number of the business service device, the used protocol type, and the port number of the communications apparatus. For example, the forwarding table is a four-tuple table, and includes the IP address of the business service device, the port number of the business service device, the used protocol type, and the port number of the communications apparatus.

S903: When determining that the first network data packet is processed by the wireless communications unit, the wireless communications unit decapsulates the first network data packet by using a first network protocol stack.

The wireless communications unit may decapsulate the first network data packet by using the first network protocol stack, to obtain first communications information, and then process the first communications information. The first communications information is used for communicating with the business service device.

For example, the first communications information may be related information of network keepalive, P2P hole punching information, remote wireless wakeup information, or the like.

Related information of network keepalive may be a heartbeat packet. After receiving the heartbeat packet, the wireless communications unit may return an acknowledgment response. The P2P hole punching information may be a P2P hole punching request. After receiving the P2P hole punching request, the wireless communications unit may return a P2P hole punching response. The remote wireless wakeup information may be, for example, an encrypted keyword used for waking up the communications apparatus. After receiving and decrypting the encrypted keyword, the wireless communications unit wakes up the service processing unit.

S904: When determining that the first network data packet is processed by the service processing unit, the wireless communications unit sends the first network data packet to the service processing unit.

S905: The service processing unit decapsulates a second network data packet by using a second network protocol stack.

The service processing unit decapsulates the second network data packet by using the second network protocol stack, to obtain service information, and processes the service information. The service information is related to a service processed by the service processing unit.

The service information may be an acknowledgment packet corresponding to a service data packet, control signaling related to service processing, or the like.

Compared with the service processing unit, the wireless communications unit has a weaker processing capability, and a network data packet of a specific port and/or a specific protocol type is processed by the wireless communications unit. For example, a network data packet whose protocol type is an address resolution protocol (address resolution protocol, ARP) type is processed by the wireless communications unit, and a network data packet of another protocol type is processed by the service processing unit.

The service processing unit mainly includes the service data packet corresponding to the processed service, for example, an audio stream, a video stream, an audio/video stream, or a text data packet. The network data packet received by the service processing unit mainly includes control signaling or the acknowledgment packet corresponding to the service data packet. When receiving a related network data packet such as control signaling or the acknowledgment packet corresponding to the service data packet, the wireless communications unit distributes the network data packet to the service processing unit for processing.

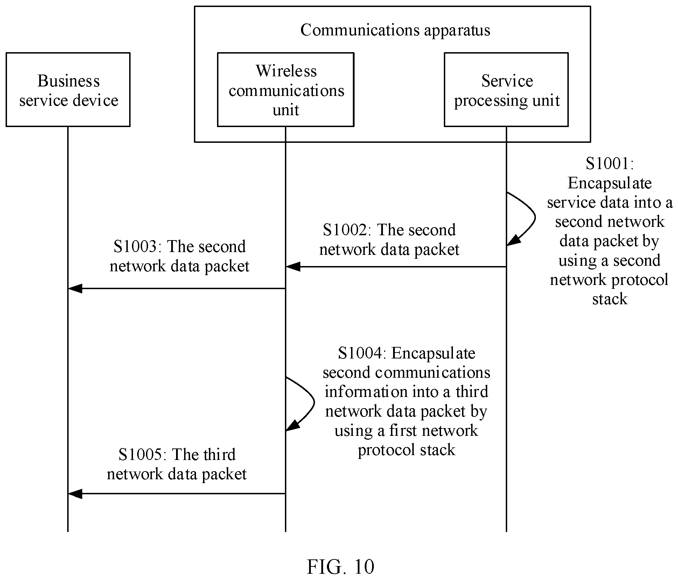

FIG. 9 is a related description of transmission of a downlink network data packet. As shown below, FIG. 10 is a schematic flowchart of a data transmission method according to an embodiment of this application. FIG. 10 is a related description of an uplink network data packet.

S1001: A service processing unit obtains service data, and encapsulates the service data into a second network data packet by using a second network protocol stack.

For example, a communications apparatus is a battery camera device, and the service data may be video data, audio data, audio/video data, or the like.

S1002: The service processing unit sends the second network data packet to a wireless communications unit.

S1003: The wireless communications unit receives the second network data packet, and sends the second network data packet to a business service device.

S1004: The wireless communications unit obtains second communications information, and encapsulates the second communications information into a third network data packet by using a first network protocol stack.

S1005: The wireless communications unit sends the third network data packet to the business service device.

It should be noted that a sequence of performing S1001 and S1004 is not limited in this embodiment of this application. For example, S1001 may be performed before S1004, or S1004 may be performed before S1001, or S1001 and S1004 may be simultaneously performed.

In addition, a resource in the wireless communications unit is limited. For example, available memory is small, and a CPU processing capability is weak. When network transmission quality deteriorates, a network data packet that is sent by the service processing unit and that carries the service data may not be processed in time, and available memory of the wireless communications unit is insufficient. Therefore, the data packet sent by the service processing unit may not be sent in time, resulting in packet loss and service interruption.

In view of this, this application provides a backpressure mechanism. When remaining memory space of the wireless communications unit is insufficient, memory on the service processing unit side may be used for caching a network packet.

When determining that the remaining memory space is less than a first threshold, the wireless communications unit sends a first notification to the service processing unit. The first notification notifies the service processing unit to suspend sending a network data packet. If currently there is the to-be-sent second network data packet on the service processing unit, or in other words, before sending the second network data packet to the wireless communications unit, the service processing unit receives the first notification from the wireless communications unit, sending the third network data packet is suspended.

After the suspension, an occasion for starting sending the third network data packet may be determined in any one of the following manners.

In a first possible manner, the wireless communications unit actively indicates, based on the remaining memory space, the service processing unit to continue sending the network data packet.

Specifically, after sending the first notification to the service processing unit, the wireless communications unit sends a second notification to the service processing unit when determining that the remaining memory space is greater than a second threshold. The second notification notifies the service processing unit to continue sending the network data packet. The second threshold is greater than the first threshold. Therefore, after receiving the second notification, the service processing unit sends the second network data packet to the wireless communications unit.

In a second possible manner, the service processing unit actively attempts to perform sending to the wireless communications unit.

Specifically, after duration for receiving the first notification by the service processing unit reaches preset duration, the service processing unit sends the second network data packet to the wireless communications unit. After receiving the second network data packet, the wireless communications unit determines that the remaining memory space is greater than the second threshold, and may continue processing the third network data packet. After receiving the second network data packet, the wireless communications unit may send the first notification to the service processing unit when determining that the remaining memory space is less than the first threshold. It should be understood that, after receiving the first notification sent by the wireless communications unit, the service processing unit suspends sending the network data packet to the wireless communications unit, and enters a scheduled sending state. For example, after receiving a preset time of the first notification, the service processing unit sends the network data packet to the wireless communications unit again. If a notification returned by the wireless communications unit is received again, the service processing unit continues to wait for the preset time and then sends the network data packet. If the wireless communications unit does not return any notification, it indicates that storage space of the wireless communications unit can support normal sending of network data. In this case, the service processing unit normally sends the network data packet to the wireless communications unit.

In this embodiment of this application, the backpressure mechanism is provided. When the memory of the wireless communications unit is insufficient, the service processing unit is notified to suspend sending. When the memory of the wireless communications unit is sufficient, for example, when sending of the network data packet on the wireless communications unit is completed, or a peer side receives a retransmitted packet, the data packet on the service processing unit arrives at the wireless communications unit. This can resolve packet loss caused by network jitter in a wireless network, and improve network sending efficiency and user experience. In an optional solution, the wireless communications unit sends a notification to the service processing unit only when the memory is insufficient. If the service processing unit does not receive, after sending a data packet to the wireless communications unit, a message returned by the wireless communications unit, it indicates that the memory of the wireless communications unit is sufficient, and the service processing unit may normally send the data packet to the wireless communications unit.

In this embodiment of this application, a network protocol stack is disposed in both the service processing unit and the wireless communications unit, and the wireless communications unit is responsible for distribution. This can ensure processing of a network service and a throughput of a wireless network when a processing capability of the wireless communications unit is weak. The network protocol stack is deployed on the wireless communications unit. When the service processing unit is powered off, the wireless communications unit can still communicate with an external device, for example, network keepalive and remote wakeup. In addition, a network application can be independently developed for the wireless communications unit, and service deployment is also easier for a low-power-consumption wireless communications unit. The network protocol stack is deployed on the service processing unit. After being powered on, the service processing unit can independently exchange a network data packet with the external device, for example, transmission of an audio/video stream. A network application can be independently developed for the service processing unit, and service deployment is also easier for the service processing unit.

In addition, in the deployment mode of the foregoing variant bridge, the service processing unit and the wireless communications unit are set with a same IP address, and address translation is not required. This can avoid a performance loss caused by address translation and impact on transmission efficiency of a data bitstream.

The following describes in detail the solutions provided in the embodiments of this application with reference to a deployment architecture of a variant bridge.

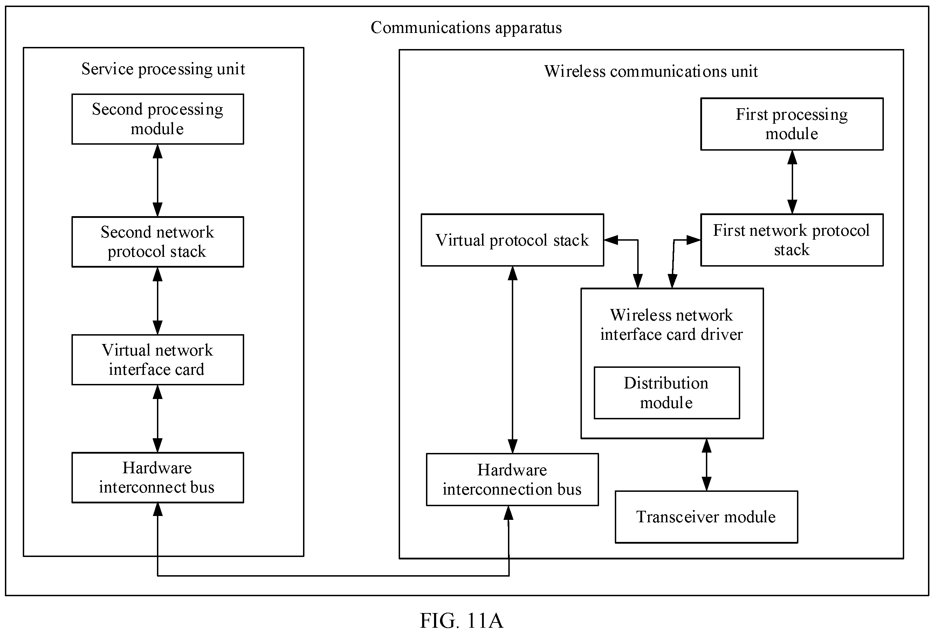

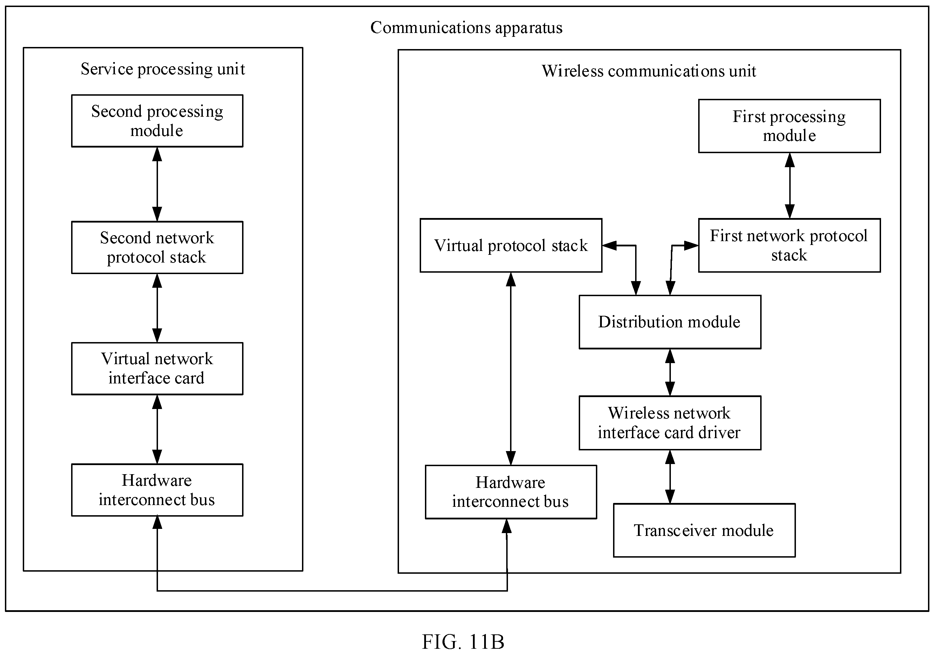

FIG. 11A and FIG. 11B are schematic diagrams of two examples of deployment architectures of variant bridges according to an embodiment of this application. A wireless communications unit of a communications apparatus includes a transceiver module, a distribution module, a first network protocol stack, and a first processing module. The transceiver module may be a radio frequency (radio frequency, RF), configured to receive and send a network data packet. The distribution module is configured to perform distribution processing on a received network data packet from a business service device, and determine that the received network data packet is processed by the wireless communications unit or a service processing unit. The distribution module may be deployed together with the first network protocol stack, or the distribution module may be deployed on the first network protocol stack. The wireless communications unit further includes a wireless network interface card driver. The distribution module may alternatively be deployed on the wireless network interface card driver. Alternatively, the distribution module may be independently deployed. A deployment location of the distribution module is not specifically limited in this application. In FIG. 11A, an example in which the distribution module is deployed on the wireless network interface card driver is used. In FIG. 11B, an example in which the distribution module is independently deployed is used. The first processing module may be a wireless application (application, app), for example, a Wi-Fi app.

The service processing unit of the communications apparatus includes a second network protocol stack and a second processing module. The service processing unit may not be provided with a physical network interface card (network interface card, NIC). The network interface card may be referred to as a network adapter for short. A virtual (virtual) network interface card (network interface card, NIC) may be deployed on the service processing unit and used as a network interface card of the second network protocol stack. The second processing module may be an app configured to implement a service, for example, a camera app. An IP address of the virtual network interface card is the same as an IP address of the wireless network interface card driver.

The wireless communications unit further includes a virtual protocol stack, configured to serve as a proxy protocol stack of the second network protocol stack in the service processing unit. Therefore, it is implemented that a same IP address and/or medium access control (media access control, MAC) address are/is used for network data packets sent by the wireless communications unit and the service processing unit.

The service processing unit and the wireless communications unit may be connected through a hardware interconnect bus.

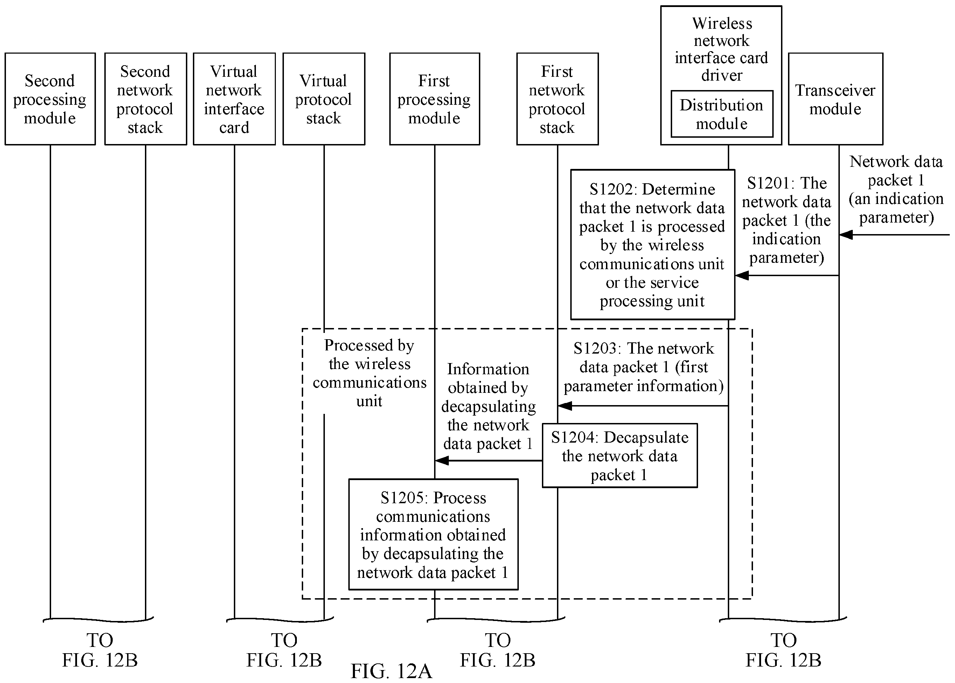

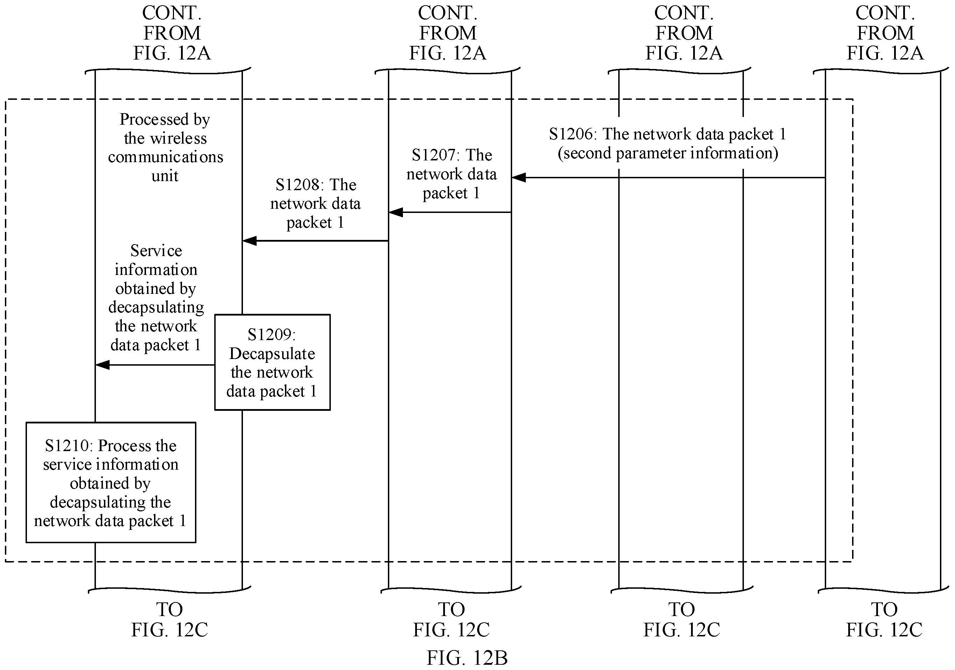

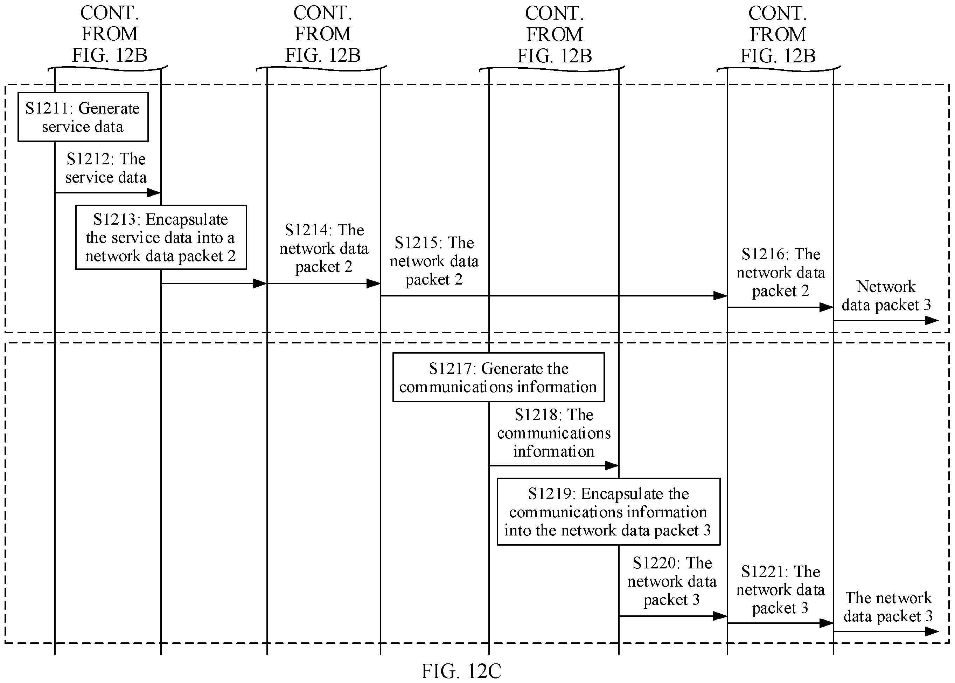

FIG. 12A, FIG. 12B and FIG. 12C are a schematic flowchart of a data transmission method according to an embodiment of this application. In FIG. 12A, FIG. 12B and FIG. 12C, the solution provided in this embodiment of this application is described with reference to the deployment architecture in FIG. 11A. S1201 to S1208 describe transmission and processing of a received downlink data packet. Steps S1209 to S1214 describe processing and transmission of uplink data generated by a service processing unit. Steps S1215 to S1219 describe processing and transmission of uplink data generated by a wireless communications unit.

S1201: A transceiver module receives a network data packet 1 from a business service device. The network data packet 1 carries an indication parameter. The transceiver module sends the first network data packet to a wireless network interface card driver. The indication parameter is used for determining that the network data packet 1 is processed by the wireless communications unit or the service processing unit.

S1202: A distribution module in the wireless network interface card driver determines, based on the indication parameter, that the network data packet 1 is processed by the wireless communications unit or the service processing unit. When it is determined that the network data packet 1 is processed by the wireless communications unit, perform S1203.

For example, if the indication parameter in a packet header of the network data packet 1 is first parameter information, processing is performed by the wireless communications unit. If the indication parameter in the packet header of the network data packet 1 is second parameter information, processing is performed by the service processing unit.

When it is determined that the network data packet 1 is processed by the service processing unit, perform S1206. The distribution module forwards the network data packet 1 to a virtual protocol stack.

S1203: The distribution module forwards the first network data packet to a first network protocol stack.

S1204: The first network protocol stack decapsulates the network data packet 1, and sends information obtained after the decapsulation to a first processing module.

S1205: The first processing module processes communications information obtained by decapsulating the network data packet 1.

S1206: The distribution module forwards the network data packet 1 to the virtual protocol stack.

S1207: The virtual protocol stack sends the network data packet 1 to a virtual network interface card through a hardware interconnect bus.

S1208: The virtual network interface card sends the network data packet 1 to a second network protocol stack.

S1209: The second network protocol stack decapsulates the network data packet 1, and sends information obtained after the decapsulation to a second processing module.

S1210: The second processing module processes service information obtained by decapsulating the network data packet 1.

S1211: The second processing module generates service data. For example, a camera app generates a medium stream. The medium stream may be an audio stream, a video stream, or an audio/video stream.

S1212: The second processing module sends the service data to the second network protocol stack.

S1213: The second network protocol stack encapsulates the service data into a network data packet 2.

S1214: The second network protocol stack sends the network data packet 2 to the wireless communications unit by using the virtual network interface card.

S1215: The virtual protocol stack receives the network data packet 2 from the wireless communications unit, and sends the network data packet 2 to the wireless network interface card driver.

S1216: The wireless network interface card driver sends the network data packet 2 to the transceiver module, so that the transceiver module sends the network data packet 2.

S1217: The first processing module generates the communications information, for example, a heartbeat packet.

S1218: The first processing module sends the communications information to the first network protocol stack.

S1219: The first network protocol stack encapsulates the communications information into a network data packet 3.

S1220: The first network protocol stack sends the network data packet 3 to the wireless network interface card driver.

S1221: The wireless network interface card driver sends the network data packet 3 to the transceiver module, so that the transceiver module sends the network data packet 3.

A backpressure mechanism in this embodiment of this application may be provided between the virtual network interface card and the virtual protocol stack. For example, when the service processing unit sends audio/video data at a high bit rate, memory on the wireless communications unit may be insufficient. When determining that remaining memory space is less than a first threshold, the virtual protocol stack on the wireless communications unit sends a first notification to the service processing unit. The first notification notifies the service processing unit to suspend sending a network data packet. Therefore, before sending the third network data packet to the wireless communications unit, the virtual network interface card suspend sending the third network data packet when receiving the first notification.

In a manner in which the wireless communications unit actively indicates, based on the remaining memory space, the service processing unit to continue sending the network data packet, after sending the first notification to the service processing unit, the virtual protocol stack sends a second notification to the service processing unit when determining that the remaining memory space is greater than a second threshold. The second notification indicates the service processing unit to continue sending the network data packet. Therefore, when receiving the second notification, the virtual network interface card sends the third network data packet to the wireless communications unit.

In a manner in which the service processing unit actively attempts to perform sending to the wireless communications unit, when determining that duration for receiving the first notification sent by the virtual protocol stack reaches preset duration, the virtual network interface card sends the third network data packet to the wireless communications unit. After receiving the third network data packet, the virtual protocol stack may send the first notification to the virtual network interface card when determining that the remaining memory space is still insufficient. If the remaining memory space is sufficient, the first notification may no longer be sent to the virtual network interface card.

The following describes that the service processing unit and the wireless communications unit use different IP addresses.

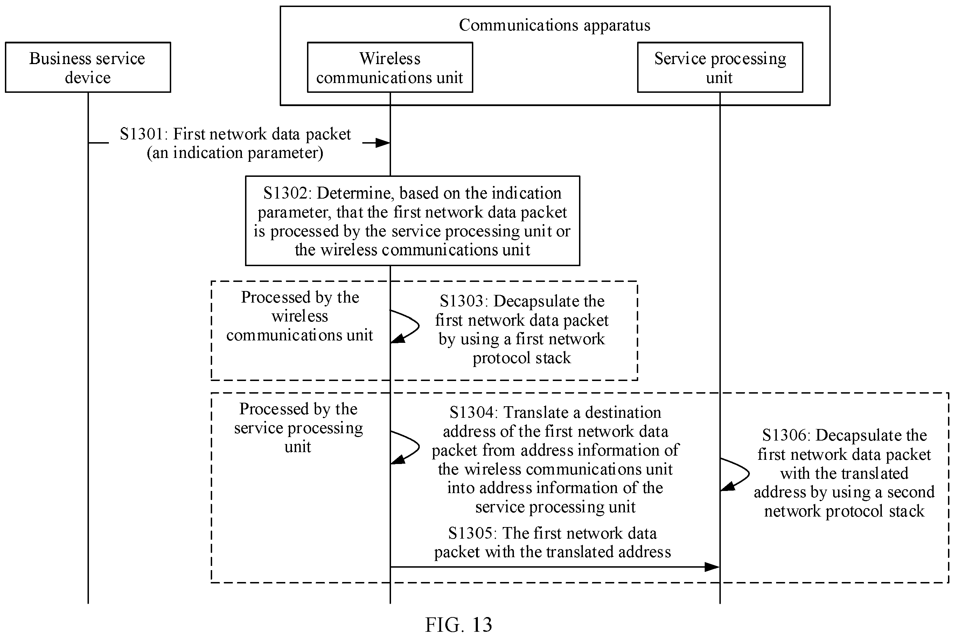

FIG. 13 is a schematic flowchart of another data transmission method according to an embodiment of this application.

For S1301 to S1303, refer to S901 to S903.

S1304: When determining that a first network data packet is processed by a service processing unit, a wireless communications unit translates a destination address of the first network data packet from address information of the wireless communications unit into address information of the service processing unit. The address information of the wireless communications unit herein is external address information of the wireless communications unit.

The address information may include an IP address, or include an IP address and a port number, or the address information includes a port number.

S1305: The wireless communications unit sends the first network data packet with the translated address to the service processing unit.

S1306: The service processing unit decapsulates the first network data packet with the translated address by using a second network protocol stack.

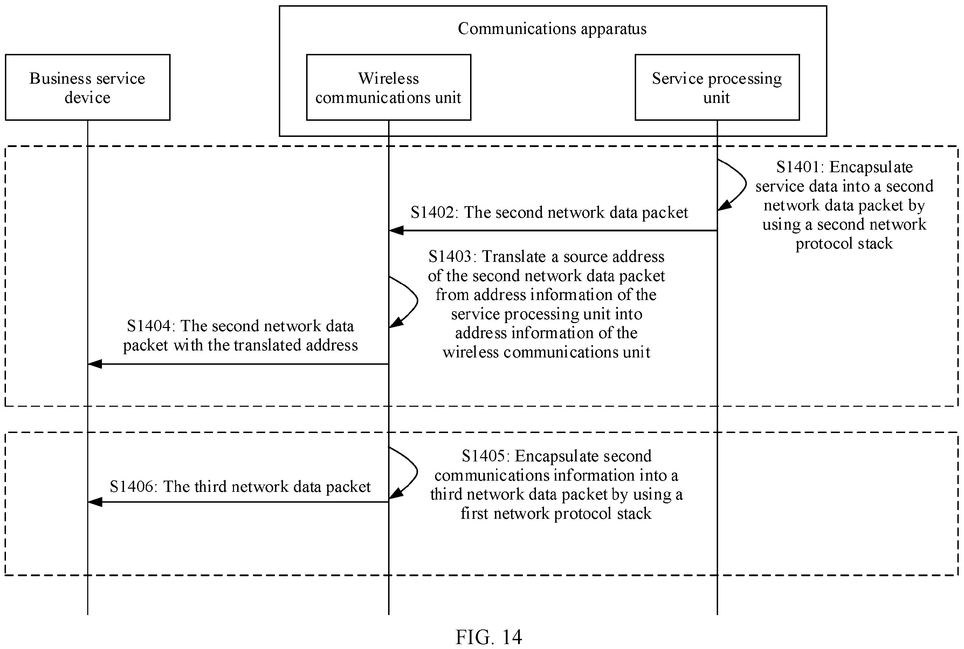

FIG. 13 is a related description of transmission of a downlink network data packet. As shown below, FIG. 14 is a schematic flowchart of a data transmission method according to an embodiment of this application. FIG. 14 is a related description of an uplink network data packet.

For S1401 and S1402, refer to S1001 and S1002.

S1403: A wireless communications unit receives a second network data packet, and translates a source address of the second network data packet from address information of a service processing unit into address information of the wireless communications unit. The address information of the wireless communications unit herein is external address information of the wireless communications unit.

S1404: The wireless communications unit sends the second network data packet with the translated address to a business service device.

For S1405 and S1406, refer to S1004 and S1005. Details are not described herein again.

It should be noted that a sequence of performing S1401 to S1405 is not limited in this embodiment of this application. For example, S1401 may be performed before S1405, or S1003 may be performed before S1401, or S1401 and S1405 may be simultaneously performed.

A backpressure mechanism is also applicable to a scenario in which the service processing unit and the wireless communications unit use different IP addresses. For details, refer to related descriptions in a scenario in which the processing unit and the wireless communications unit may share a same IP address. Details are not described herein again.

With reference to a deployment architecture of NAT translation, the following describes in detail a solution in which the service processing unit and the wireless communications unit use different IP addresses.

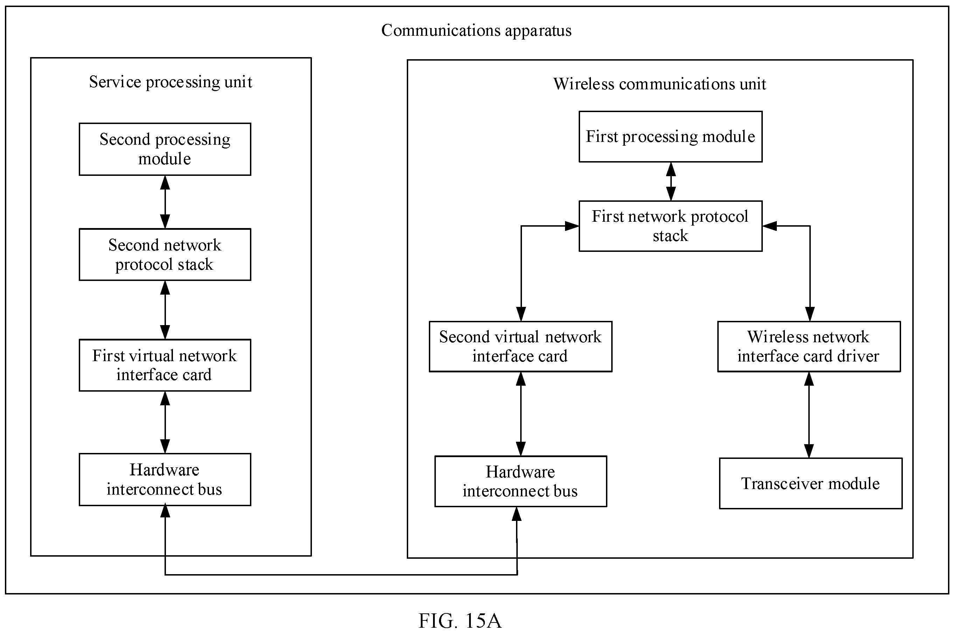

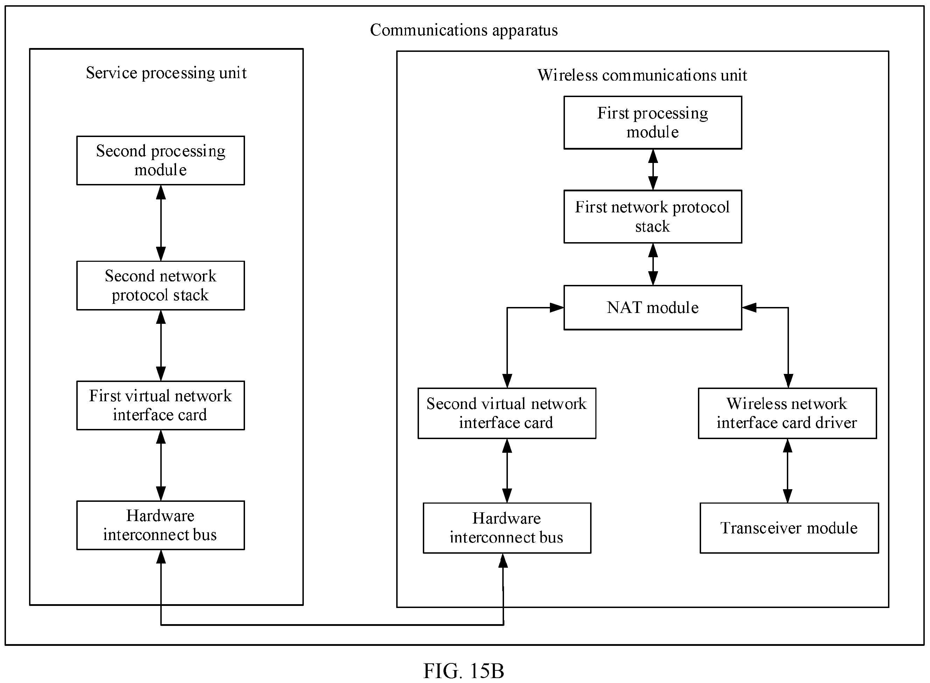

FIG. 15A and FIG. 15B are schematic diagrams of two examples of NAT deployment architectures according to an embodiment of this application. A wireless communications unit of a communications apparatus includes a transceiver module, a first network protocol stack, and a first processing module. The transceiver module may be a radio frequency (radio frequency, RF), configured to receive and send a network data packet. The first network protocol stack is configured to encapsulate a data packet. The first network protocol stack further has a distribution function, configured to perform distribution processing on a received network data packet from a business service device, and determine that the received network data packet is processed by the wireless communications unit or a service processing unit. In an example, referring to FIG. 15A, the first network protocol stack further has a NAT translation function. In another example, the NAT translation function may alternatively be deployed outside the first network protocol stack, and is performed by a separate module. Referring to FIG. 15B, a NAT module is deployed on the wireless communications unit, and may perform IP packet header processing on a network data packet sent by the service processing unit, change a source IP address and/or source port number, and then resend the network data packet to the business service device. In addition, for the network data packet sent from the external business service device, the wireless communications unit may determine, based on indication parameter in the network data packet and a mapping relationship, that the network data packet is sent to the service processing unit or the wireless communications unit itself. If the network data packet is sent to the service processing unit, a corresponding relationship is found from an address translation table, and a destination IP address and a destination port number are replaced before the network data packet is sent to the service processing unit.

The service processing unit of the communications apparatus includes a second network protocol stack and a second processing module. The service processing unit may not be provided with a physical network interface card. A virtual network interface card may be deployed on the service processing unit as a network interface card of the second network protocol stack. For ease of distinguishing, the virtual network interface card deployed on the service processing unit is referred to as a first virtual network interface card. The second processing module may be an app configured to implement a service, for example, a camera app. An IP address of the first virtual network interface card is different from an IP address of a wireless network interface card driver.

A virtual network interface card is also deployed on the wireless communications unit. For ease of distinguishing, the virtual network interface card deployed on the wireless communications unit is referred to as a second virtual network interface card. The second virtual network interface card is used as a proxy network interface card of the first virtual network interface card. Registration information of the second virtual network interface card is sent to the first network protocol stack. The registration information of the second virtual network interface card may include an IP address and/or a port number of the second virtual network interface card.

The service processing unit and the wireless communications unit may be connected through a hardware interconnect bus.

In an example, the IP address of the first virtual network interface card may be 192.168.1.2, and is used as an IP address of the service processing unit. The IP address of the second virtual network interface card may be 192.168.1.1, and is used as an internal IP address of the wireless communications unit. The internal IP address of the wireless communications unit may be used for communication between the service processing unit and the wireless communications unit. It should be noted that communication between the service processing unit and the wireless communications unit described herein does not include a case in which communication between the service processing unit and the business service device passes through the wireless communications unit. The IP address of the wireless network interface card driver may be 192.168.0.2, and is used as an external IP address of the wireless communications unit.

For example, the IP address of the first virtual network interface card may be the same as the IP address of the second virtual network interface card.

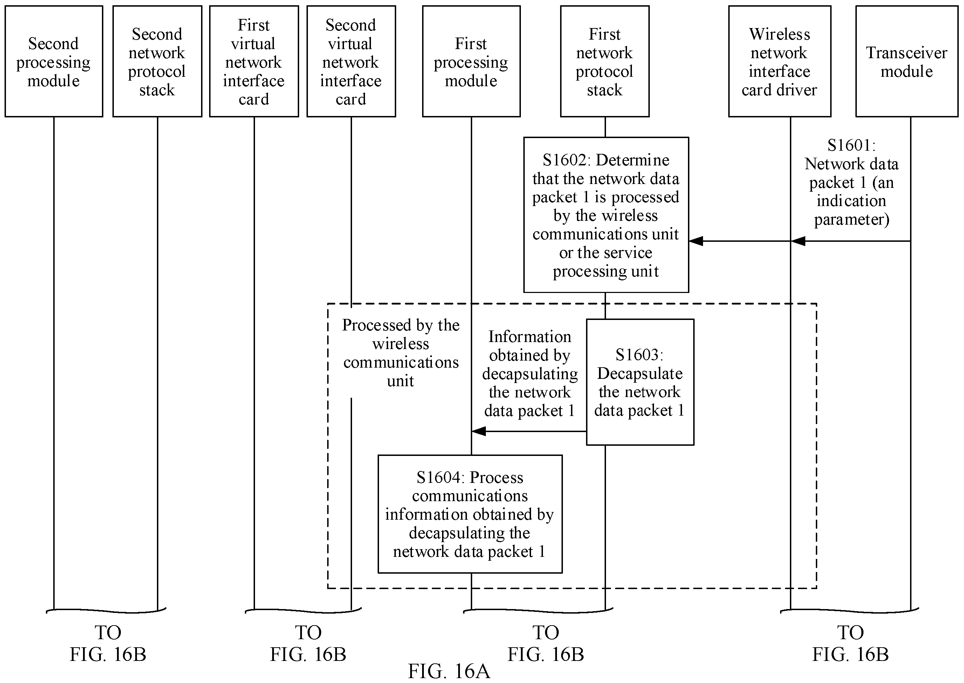

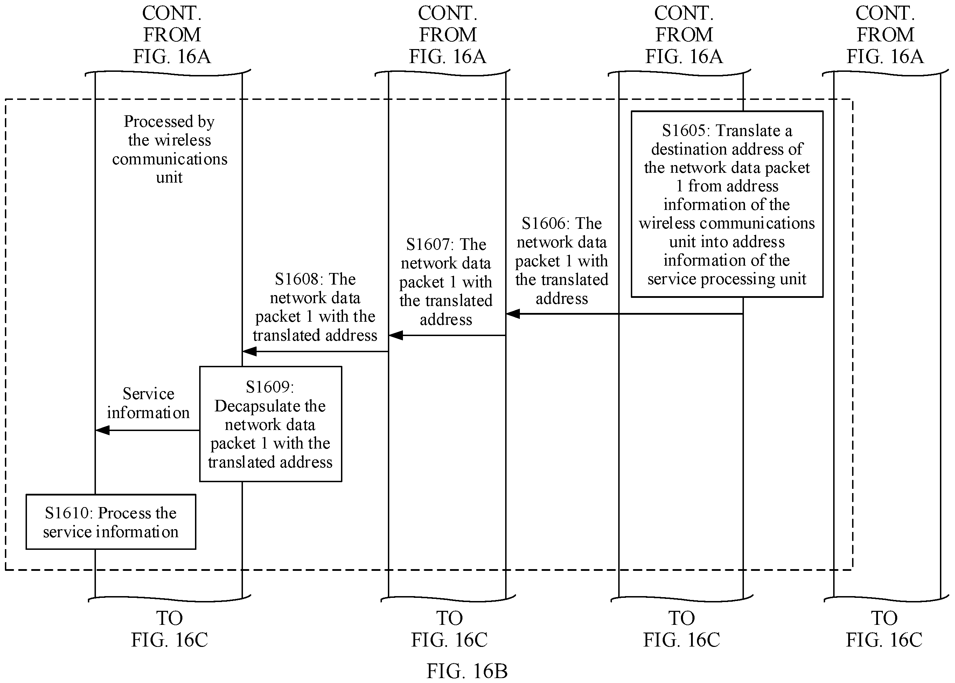

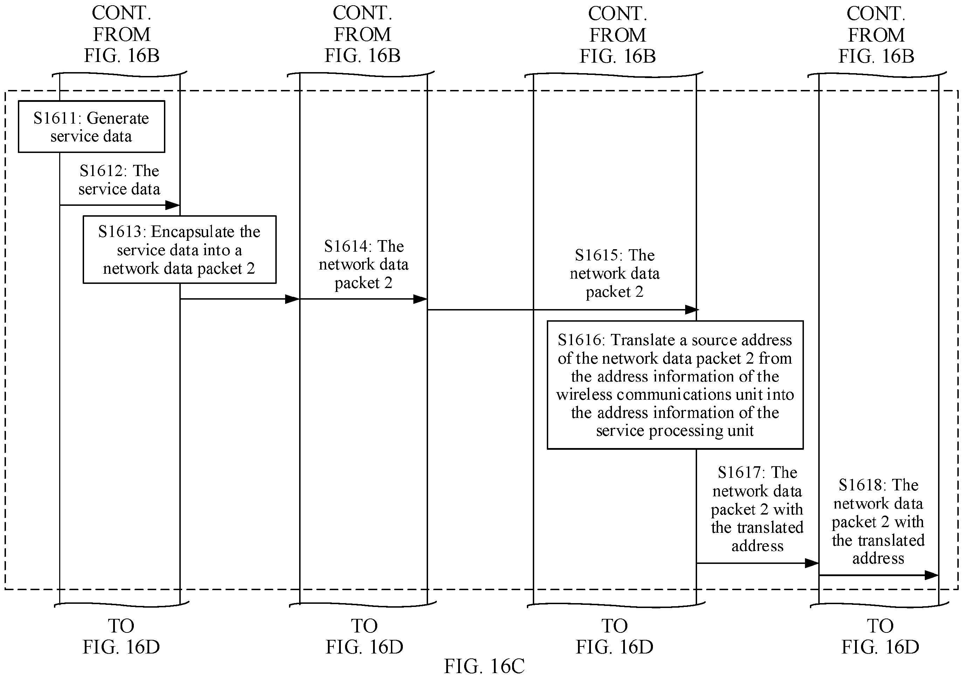

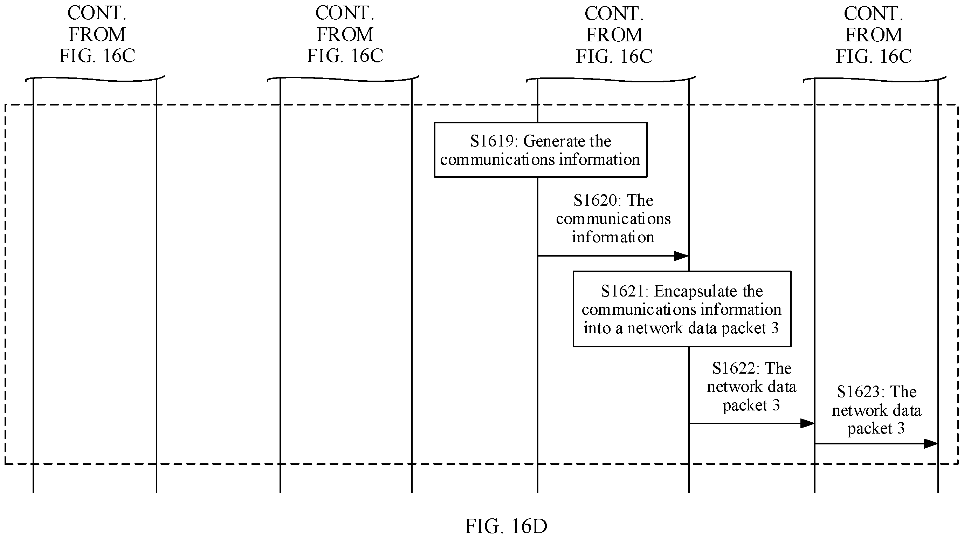

FIG. 16A, FIG. 16B, FIG. 16C, and FIG. 16D are a schematic flowchart of a data transmission method according to an embodiment of this application. In FIG. 16A, FIG. 16B, FIG. 16C, and FIG. 16D, the solution provided in this embodiment of this application is described with reference to the deployment architecture in FIG. 15A. S1601 to S1610 describe receiving and processing of a downlink data packet. Steps S1611 to S1618 describe processing and transmission of uplink data generated by a service processing unit. Steps S1619 to S1623 describe processing and transmission of uplink data generated by a wireless communications unit.

S1601: A transceiver module receives a network data packet 1 from a business service device. The network data packet 1 carries an indication parameter. The transceiver module sends the first network data packet to a first network protocol stack by using a wireless network interface card driver. The indication parameter is used for determining that the network data packet 1 is processed by the wireless communications unit or the service processing unit.

S1602: The first network protocol stack determines, based on the indication parameter, that the network data packet 1 is processed by the wireless communications unit or the service processing unit. When it is determined that the network data packet 1 is processed by the wireless communications unit, perform S1603.

For example, if the indication parameter in a packet header of the network data packet 1 is first parameter information, processing is performed by the wireless communications unit. If the indication parameter in the packet header of the network data packet 1 is second parameter information, processing is performed by the service processing unit.

When it is determined that the network data packet 1 is processed by the service processing unit, perform S1605.

S1603: The first network protocol stack decapsulates the network data packet 1, and sends information obtained after the decapsulation to a first processing module.

S1604: The first processing module processes communications information obtained by decapsulating the network data packet 1.

S1605: The first network protocol stack translates a destination address of the network data packet 1 from address information of the wireless communications unit into address information of the service processing unit. The address information includes an IP address and/or a port number.

Before the address translation, the destination address of the network data packet 1 is the address information of the wireless communications unit. After the address translation, the destination address of the network data packet 1 is the address information of the service processing unit.

For example, the address information includes an IP address. A destination IP address of the network data packet 1 is 192.168.0.2, and a translated destination IP address of the network data packet is 192.168.1.2. An address translation table is stored in a communications apparatus, and there is a mapping relationship between 192.168.0.2 and 192.168.1.2 in the address translation table.

For example, the address information includes an IP address and a port number. A destination IP address of the network data packet 1 is 192.168.0.2, and a port number is 888. A translated destination IP address of the network data packet is 192.168.1.2, and a translated port number is 666.

S1606: The first network protocol stack forwards the network data packet 1 with the translated address to a second virtual network interface card.

S1607: The second virtual network interface card sends the network data packet 1 to a first virtual network interface card through a hardware interconnection bus.

S1608: The first virtual network interface card sends the network data packet 1 to a second network protocol stack.

S1609: The second network protocol stack decapsulates the network data packet 1 sends information obtained after the decapsulation to a second processing module.

The second network protocol stack determines, based on the destination address of the network data packet 1 with the translated address, that the network data packet 1 is a data packet sent to the service processing unit for processing, and then sends the network data packet 1 to the second processing module for processing.

S1610: The second processing module processes service information obtained by decapsulating the network data packet 1 with the translated address.

S1611: The second processing module generates service data. For example, a camera app generates a medium stream. The medium stream may be an audio stream, a video stream, or an audio/video stream.

S1612: The second processing module sends the service data to the second network protocol stack.

S1613: The second network protocol stack encapsulates the service data into a network data packet 2.

S1614: The second network protocol stack sends the network data packet 2 to the wireless communications unit by using the first virtual network interface card.

S1615: The second virtual network interface card receives the network data packet 2 from the wireless communications unit, and sends the network data packet 2 to the first network protocol stack.

S1616: The first network protocol stack translates a source address of the network data packet 2 from the address information of the wireless communications unit into the address information of the service processing unit.

S1617: The first network protocol stack sends the network data packet 2 with the translated address to the wireless network interface card driver.

S1618: The wireless network interface card driver sends the network data packet 2 with the translated address to the transceiver module, so that the transceiver module sends the network data packet 2 with the translated address.

S1619: The first processing module generates the communications information, for example, a heartbeat packet.

S1620: The first processing module sends the communications information to the first network protocol stack.

S1621: The first network protocol stack encapsulates the communications information into a network data packet 3.

S1622: The first network protocol stack sends the network data packet 3 to the wireless network interface card driver.

S1623: The wireless network interface card driver sends the network data packet 3 to the transceiver module, so that the transceiver module sends the network data packet 3.

In addition, when the wireless communications unit sets both external address information and internal address information, the wireless communications unit may send a data packet to the service processing unit. For example, the wireless communications unit generates a data packet 1. A source IP address of the data packet 1 is an internal IP address of the wireless communications unit, for example, 192.168.1.1, and a destination IP address of the data packet 1 is an IP address of the service processing unit, for example, 192.168.1.2. The service processing unit receives the data packet 1, and may determine that the data packet 1 is the data packet 1 sent by the wireless communications unit, so as to decapsulate and process the data packet 1. Similarly, the service processing unit may also send a data packet, for example, a data packet 2, to the wireless network communications unit. A source IP address of the data packet 2 is the IP address of the service processing unit, and a destination IP address of the data packet 2 is the internal IP address of the wireless communications unit. The wireless communications unit receives the data packet 2, and the first network protocol stack determines, based on the destination IP address, that the data packet is to be sent to the wireless communications unit for processing, so as to forward the data packet to the first processing module for processing.

In the foregoing NAT solution of this embodiment of this application, a network protocol stack is disposed on both the service processing unit and the wireless communications unit, and the wireless communications unit is responsible for distribution. This can ensure processing of a network service and improve a throughput of a wireless network can be improved when a processing capability of the wireless communications unit is weak. The network protocol stack is deployed on the wireless communications unit. When the service processing unit is powered off, the wireless communications unit can still communicate with an external device, for example, network keepalive and remote wakeup. In addition, a network application can be independently developed for the wireless communications unit, and service deployment is also easier for a low-power-consumption wireless communications unit. The network protocol stack is deployed on the service processing unit. After being powered on, the service processing unit can independently exchange a network data packet with the external device, for example, transmission of an audio/video stream. A network application can be independently developed for the service processing unit, and service deployment is also easier for the service processing unit.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A data transmission method, applied to a communications apparatus comprising a service processing unit and a wireless communications unit, wherein the method comprises:
receiving, by the wireless communications unit, a first network data packet from a business service device, wherein the first network data packet comprises an indication parameter, and the indication parameter is used for determining that the first network data packet is processed by the wireless communications unit or the service processing unit; and
when the wireless communications unit determines that the first network data packet is processed by the wireless communications unit, decapsulating, by the wireless communications unit, the first network data packet by using a first network protocol stack; or
when the wireless communications unit determines that the first network data packet is processed by the service processing unit, sending, by the wireless communications unit, the first network data packet to the service processing unit; and decapsulating, by the service processing unit, the first network data packet by using a second network protocol stack.

2. The method according to claim 1, wherein the determining, by the wireless communications unit based on the indication parameter, that the first network data packet is processed by the wireless communications unit or the service processing unit comprises:
when the indication parameter is first parameter information, determining, by the wireless communications unit based on the first parameter information and a mapping relationship, that the first network data packet is processed by the wireless communications unit; and
when the indication parameter is second parameter information, determining, by the wireless communications unit based on the second parameter information and the mapping relationship, that the first network data packet is processed by the service processing unit, wherein
the mapping relationship comprises an association relationship between the first parameter information and an identifier of the wireless communications unit, and/or an association relationship between the second parameter information and the service processing unit.

3. The method according to claim 1 or 2, wherein the sending, by the wireless communications unit, the first network data packet to the service processing unit comprises:
translating, by the wireless communications unit, a destination address of the first network data packet from address information of the wireless processing unit into address information of the service processing unit; and
sending, by the wireless communications unit, the first network data packet with the translated address to the service processing unit based on the address information of the service processing unit.

4. The method according to claim 3, wherein the address information comprises an internet protocol IP address and/or a port number.

5. The method according to any one of claims 1 to 4, further comprising:
encapsulating, by the service processing unit by using the second network protocol stack, to-be-sent service data on the service processing unit into a second network data packet;
sending, by the service processing unit, the second network data packet to the wireless communications unit; and
receiving, by the wireless communications unit, the second network data packet, and sending the second network data packet to the business service device.

6. The method according to claim 5, wherein the sending, by the wireless communications unit, the second network data packet to the business service device comprises:
translating, by the wireless communications unit, a source address of the second network data packet from the address information of the service processing unit into the address information of the wireless communications unit, and sending the second network data packet with the translated address to the business service device.

7. The method according to any one of claims 1 to 6, further comprising:
when the wireless communications unit determines that remaining memory space is less than a first threshold, sending, by the wireless communications unit, a first notification to the service processing unit, wherein the first notification notifies the service processing unit to suspend sending a network data packet.

8. The method according to claim 7, wherein the method comprises: after sending the first notification to the service processing unit, sending, by the wireless communications unit, a second notification to the service processing unit when determining that the remaining memory space is greater than a second threshold, wherein the second notification indicates the service processing unit to continue sending the network data packet, and the second threshold is greater than the first threshold; and
when the service processing unit receives the second notification, continuing, by the service processing unit, sending the network data packet to the wireless communications unit.

9. The method according to claim 7, wherein the sending, by the service processing unit, the second network data packet to the wireless communications unit comprises:
when the service processing unit determines that duration for receiving the first notification sent by the service processing unit reaches preset duration, continuing, by the service processing unit, sending the network data packet to the wireless communications unit.

10. The method according to any one of claims 1 to 9, further comprising:
obtaining, by the wireless communications unit, second communications information, encapsulating the second communications information into a third network data packet by using the first network protocol stack, and sending the third network data packet.

11. The method according to any one of claims 1 to 10, wherein the indication parameter comprises one or more of an IP address, a port number, or a protocol type.

12. A data transmission apparatus, comprising a service processing unit and a wireless communications unit, wherein a first network protocol stack is deployed on the wireless communications unit, and a second network protocol stack is deployed on the service processing unit;
the wireless communications unit is configured to receive a first network data packet from a business service device, wherein the first network data packet comprises an indication parameter, and the indication parameter is used for determining that the first network data packet is processed by the wireless communications unit or the service processing unit; and
the wireless communications unit is further configured to: when determining that the first network data packet is processed by the wireless communications unit, decapsulate the first network data packet by using the first network protocol stack; or
the wireless communications unit is further configured to: when determining that the first network data packet is processed by the service processing unit, send the first network data packet to the service processing unit; and
the service processing unit is configured to decapsulate the first network data packet by using the second network protocol stack.

13. The apparatus according to claim 12, wherein
when the indication parameter is first parameter information, the wireless communications unit is specifically configured to determine, based on the first parameter information and a mapping relationship, that the first network data packet is processed by the wireless communications unit; and
when the indication parameter is second parameter information, the wireless communications unit is specifically configured to determine, based on the second parameter information and the mapping relationship, that the first network data packet is processed by the service processing unit, wherein
the mapping relationship comprises an association relationship between the first parameter information and an identifier of the wireless communications unit, and/or an association relationship between the second parameter information and the service processing unit.

14. The apparatus according to claim 12 or 13, wherein before sending the first network data packet to the service processing unit, the wireless communications unit is further configured to translate a destination address of the first network data packet from address information of the wireless processing unit into address information of the service processing unit; and
when sending the first network data packet to the service processing unit, the wireless communications unit is specifically configured to send the first network data packet with the translated address to the service processing unit based on the address information of the service processing unit.

15. The apparatus according to claim 14, wherein the address information comprises an internet protocol IP address and/or a port number.

16. The apparatus according to any one of claims 12 to 15, wherein
the service processing unit is further configured to encapsulate, by using the second network protocol stack, to-be-sent service data on the service processing unit into a second network data packet;
the service processing unit is further configured to send the second network data packet to the wireless communications unit; and
the wireless communications unit is further configured to receive the second network data packet, and send the second network data packet to the business service device.

17. The apparatus according to claim 16, wherein before sending the second network data packet to the business service device, the wireless communications unit is further configured to translate a source address of the second network data packet from the address information of the service processing unit into the address information of the wireless communications unit; and
when sending the second network data packet to the business service device, the wireless communications unit is specifically configured to send the second network data packet with the translated address to the business service device.

18. The apparatus according to any one of claims 12 to 17, wherein
the wireless communications unit is further configured to: when determining that remaining memory space is less than a first threshold, send a first notification to the service processing unit, wherein the first notification notifies the service processing unit to suspend sending a network data packet.

19. The apparatus according to claim 18, wherein after sending the first notification to the service processing unit, the wireless communications unit is further configured to send a second notification to the service processing unit when determining that the remaining memory space is greater than a second threshold, wherein the second notification indicates the service processing unit to continue sending the network data packet, and the second threshold is greater than the first threshold; and
the service processing unit is specifically configured to: when receiving the second notification, continue sending the network data packet to the wireless communications unit.

20. The apparatus according to claim 18, wherein the service processing unit is specifically configured to:
when determining that duration for receiving the first notification sent by the service processing unit reaches preset duration, continue sending the network data packet to the wireless communications unit.

21. The apparatus according to any one of claims 12 to 20, wherein
the wireless communications unit is further configured to obtain second communications information, encapsulate the second communications information into a third network data packet by using the first network protocol stack, and send the third network data packet.

22. The apparatus according to any one of claims 12 to 21, wherein the indication parameter comprises one or more of an IP address, a port number, or a protocol type.

23. A communications apparatus, comprising a processor and an interface circuit, wherein the interface circuit is configured to receive a signal from another communications apparatus other than the communications apparatus and transmit the signal to the processor, or send a signal from the processor to the another communications apparatus other than the communications apparatus, and the processor implements the method according to any one of claims 1 to 11 by using a logic circuit or executing code instructions.

24. A computer-readable storage medium, wherein the computer-readable storage medium stores computer instructions, and when the computer instructions are executed, the method according to any one of claims 1 to 11 is performed.
